# EUROPÄISCHE PATENTSCHRIFT

(11) **EP 2 054 281 B1**
(45) Veröffentlichungstag und Bekanntmachung des Hinweises auf die Patenterteilung: **25.12.2013**
(21) Anmeldenummer: 07802685.3
(22) Anmeldetag: 17.08.2007
(51) Int. Cl.: B60T 7/22, B60W 30/08, B60W 10/18, B60W 10/04, B60W 40/09, B60W 30/095

(54) **ANSTEUERUNG VON SICHERHEITSMITTELN EINES KRAFTFAHRZEUGS**
ACTUATION OF SAFETY MEANS OF A MOTOR VEHICLE
COMMANDE DE MOYENS DE SÉCURITÉ D'UN VÉHICULE AUTOMOBILE

(30) Priorität: 10.07.2007 DE 102007032039; 17.08.2007 DE 102007039039
(43) Veröffentlichungstag der Anmeldung: 06.05.2009
(73) Patentinhaber: Continental Teves AG & Co. oHG, 60488 Frankfurt (DE)
(72) Erfinder: KALLNIK, Martin, 64291 Darmstadt (DE); BAIJENS, Mark, 63067 Offenbach (DE); MEURERS, Thomas, 65760 Eschborn (DE); TORRAS, Xavier, 64287 Darmstadt (DE); OLSHANSKY, Yuriy, 65812 Bad Soden (DE)
(74) Vertreter: Bobbert, Christiana
(86) Internationale Anmeldenummer: PCT/EP2007/058574
(87) Internationale Veröffentlichungsnummer: WO 2008/020076

(56) Entgegenhaltungen:
- EP-A- 1 375 280
- EP-A- 1 544 070
- EP-A- 1 657 103
- WO-A-03/045726

## Beschreibung

### Technisches Gebiet

Die Erfindung betrifft ein Verfahren zum Ansteuern von Sicherheitsmitteln in einem Kraftfahrzeug in einer Fahrsituation, in der es zu einer Kollision zwischen dem Kraftfahrzeug und einem Umfeldobjekt im Umfeld des Kraftfahrzeugs kommen kann. Die Erfindung betrifft zudem ein System zum Ansteuern von Sicherheitsmitteln, das zur Durchführung des Verfahrens geeignet ist.

### Hintergrund der Erfindung

Moderne Kraftfahrzeuge verfügen teilweise bereits über Sicherheitssysteme, die in Fahrsituationen, in denen es zu einer Kollision mit einem Umfeldobjekt kommen könnte, Sicherheitsmittel ansteuern, welche den Fahrer auf die Gefahr aufmerksam machen, mittels derer kollisionsvermeidende Eingriffe in das Fahrverhalten des Fahrzeugs vorgenommen werden können und/oder welche die passive Sicherheit erhöhen, d.h. mögliche Unfallfolgen für die Fahrzeuginsassen reduzieren. Grundlage für die Ansteuerung der Sicherheitssysteme ist eine Erfassung der aktuellen Fahrsituation mittels einer geeigneten Umfeldsensorik und eine elektronische Auswertung der erfassten Daten im Hinblick auf die Gefahr von Kollisionen zwischen dem Fahrzeug und den erfassten Objekten. Nach Maßgabe der dabei ermittelten Kollisionsgefahr erfolgt dann die Ansteuerung der Sicherheitsmittel des Kraftfahrzeugs.

Dabei kann es zu Situationen kommen, in denen der Fahrer des Kraftfahrzeugs das Kollisionsrisiko anders, insbesondere geringer einschätzt, als es sich anhand der elektronischen Auswertung der erfassten Daten ergibt. In diesen Situationen kann es zu einer für den Fahrer unerwartet heftigen Ansteuerung der Sicherheitsmittel kommen, die von dem Fahrer als störend wahrgenommen wird. Ferner kann der Fahrer das Risiko für eine Kollision mit einem Umfeldobjekt in komplexen Fahrsituationen oftmals besser einschätzen als ein elektronisches Auswertesystem. Daher können beispielsweise Eingriffe in das Fahrverhalten des Fahrzeugs, die aufgrund einer von der Einschätzung des Fahrers abweichenden elektronischen Bewertung der Fahrsituation erfolgen, unverhältnismäßig heftig sein.

Aus der EP-A-1 375 280 ist ein Fahrerassistenzsystem bekannt, das den Fahrzustand eines Fahrzeugs und das Umfeld des Fahrzeugs erkennt, darauf basierend ein Risikopotenzial um das Fahrzeug herum berechnet, und basierend darauf einen Befehlswert für eine Reaktionskraft für das Gaspedal berechnet, mit dem die Reaktionskraft über entsprechende Mittel auf das Gaspedal erzeugt werden kann. Ferner wird eine Fahrerabsicht erkannt und die durch den Befehlswert erzeugte Reaktionskraft basierend auf der erkannten Fahrerabsicht korrigiert. Mit anderen Worten wird also eine automatisch erzeugte und auf das Gaspedal wirkende Kraft durch ein Fahrerverhalten beeinflusst.

### Darstellung der Erfindung

Es ist daher eine Aufgabe der vorliegenden Erfindung, eine Einschätzung der vorliegenden Fahrsituation durch den Fahrer eines Kraftfahrzeugs bei der Ansteuerung der Sicherheitsmittel zu berücksichtigen und die Ansteuerung der Sicherheitsmittel weiter zu verbessern.

Erfindungsgemäß wird diese Aufgabe durch ein Verfahren mit den Merkmalen des Patentanspruchs 1 und durch ein System mit den Merkmalen des Patentanspruchs 11 gelöst. Zweckmäßige Ausgestaltungen der Erfindung sind in den Unteransprüchen angegeben.

Demgemäß ist es vorgesehen, dass ein Verfahren der eingangs genannten Art so durchgeführt wird, dass die Sicherheitsmittel in vorgegebenen Interventionsstufen ansteuerbar sind und dass
- in Abhängigkeit von erfassten Bewegungsdaten des Umfeldobjekts ein Risiko für eine Kollision zwischen dem Kraftfahrzeug und dem Umfeldobjekt ermittelt wird und nach Maßgabe des Kollisionsrisikos eine erste Interventionsstufe bestimmt wird,
- wenigstens eine Größe ermittelt wird, die ein Verhalten eines Fahrers des Kraftfahrzeugs charakterisiert, wobei in Abhängigkeit von der ermittelten Größe eine zweite Interventionsstufe bestimmt wird, und
- die Interventionsstufe, in der die Sicherheitsmittel angesteuert werden, auf die geringere der ersten und der zweiten Interventionsstufe begrenzt wird.

Darüber hinaus wird ein System zum Ansteuern von Sicherheitsmitteln in einem Kraftfahrzeug in einer Fahrsituation bereitgestellt, in der es zu einer Kollision zwischen dem Kraftfahrzeug und einem Umfeldobjekt im Umfeld des Kraftfahrzeugs kommen kann, wobei die Sicherheitsmittel in vorgegebenen Interventionsstufen ansteuerbar sind. Das System umfasst
- eine Auswerteeinheit, die dazu ausgebildet ist in Abhängigkeit von erfassten Bewegungsdaten des Umfeldobjekts ein Risiko für eine Kollision zwischen dem Kraftfahrzeug und dem Objekt zu ermitteln,
- wenigstens einen Sensor zum Erfassen einer Größe, die ein Verhalten eines Fahrers des Kraftfahrzeugs charakterisiert, und
- einen Gefahrenrechner, der dazu ausgebildet ist, in Abhängigkeit von dem ermittelten Kollisionsrisiko eine erste Interventionsstufe zu ermitteln, in Abhängigkeit von der das Verhalten des Fahrers charakterisierenden Größe eine zweite Interventionsstufe zu bestimmen und die Interventionsstufe, in der die Sicherheitsmittel ansteuerbar sind, auf die geringere der ersten und der zweiten Interventionsstufe zu begrenzen.

Die Erfindung geht davon aus, dass sich die Einschätzung einer Fahrsituation durch den Fahrer in dem Verhalten des Fahrers widerspiegelt, und beinhaltet dabei die Idee, die Interventionsstufe, in der die Sicherheitsmittel des Kraftfahrzeugs angesteuert werden, in Abhängigkeit von dem Verhalten des Fahrers zu begrenzen. Dabei wird die Interventionsstufe, in der die Sicherheitsmittel angesteuert werden, auf die geringere der ersten, in Abhängigkeit von elektronisch ermittelten Kollisionsrisiko ermittelten Interventionsstufe und der zweiten, in Abhängigkeit von der das Fahrerverhalten charakterisierenden Größe ermittelten Interventionsstufe begrenzt. Dies bedeutet, es erfolgt eine Begrenzung auf die erste Interventionsstufe, wenn die zweite Interventionsstufe höher ist als die erste Interventionsstufe ist, und auf die zweite Interventionsstufe, wenn diese geringer als die erste Interventionsstufe ist. Die Höhe der Interventionsstufe bestimmt dabei das Maß der mittels der Sicherheitsmittel vorgenommenen Eingriffe, d.h. die "Heftigkeit" der ausgeführten Sicherheitsmaßnahmen. In geringeren Interventionsstufen kann dabei beispielsweise eine Warnung des Fahrers und/oder ein von dem Fahrer nicht wahrnehmbarer Eingriff in eine Bremsanlage des Kraftfahrzeugs vorgenommen werden. Höhere Interventionsstufe können beispielsweise Eingriffe in das Fahrverhalten des Kraftfahrzeugs vorsehen, wie etwa Bremsen- und/oder Lenkeingriffe.

Aufgrund der Begrenzung der Interventionsstufe wird verhindert, dass die Sicherheitsmittel in einer höheren Interventionsstufe angesteuert werden können. Durch die Begrenzung der Interventionsstufe in Abhängigkeit von dem Fahrerverhalten bzw. der das Fahrerverhalten charakterisierenden Größe wird somit insbesondere verhindert, dass Sicherheitsmaßnahmen ausgeführt werden, die gegenüber der fahrerseitigen Einschätzung der Fahrsituation unverhältnismäßig sind oder gar im Widerspruch zu der fahrerseitigen Einschätzung der Fahrsituation stehen.

Das Kollisionsrisiko, nach dessen Maßgabe die erste Interventionsstufe bestimmt wird, kann beispielsweise anhand einer Größe charakterisiert werden, die aus den Bewegungsdaten des Umfeldobjekts ermittelt wird. Ferner können Bewegungsdaten des Kraftfahrzeugs zur Ermittlung dieser Größer herangezogen werden. Insbesondere kann die Größe in Abhängigkeit von der relativen Position des Umfeldobjekts in Bezug auf das Kraftfahrzeug, der Zeitspanne bis zu einer möglichen Kollision zwischen dem Kraftfahrzeug und dem Umfeldobjekt, einer zur Vermeidung der Kollision erforderlichen Querbeschleunigung des Kraftfahrzeugs oder mehrerer dieser Daten berechnet werden.

Eine Ausgestaltung des Verfahrens und des Systems sieht vor, dass die Sicherheitsmittel in der geringeren der ersten und der zweiten Interventionsstufe angesteuert werden.

Zudem ist es in einer Ausführungsform des Verfahrens und des Systems vorgesehen, dass es sich bei der das Verhalten des Fahrers charakterisierenden Größe um eine Stellung eines Fahrpedals handelt, wobei mittels des Fahrpedals ein Betriebszustand eines Antriebsmotors des Kraftfahrzeugs beeinflussbar ist.

In dieser Ausführungsform wird die Erkenntnis genutzt, dass die fahrerseitige Einschätzung der Fahrsituation in der Regel das Verhalten des Fahrers bei der Betätigung des Fahrpedals beeinflusst. So verändert der Fahrer die Fahrpedalstellung in der Regel nur dann in eine Richtung, in der das von dem Antriebsmotor bereitgestellte Antriebsmoment erhöht wird, wenn er die Fahrsituation als weniger gefährlich einschätzt. In Fahrsituationen, in denen der Fahrer von einem höheren Kollisionsrisiko ausgeht, löst er im Allgemeinen das Fahrpedal.

Eine weitere Ausführungsform des Verfahrens und des Systems sieht vor, dass die das Verhalten des Fahrers charakterisierende Größe einer Bremskraft entspricht, die von dem Fahrer eingestellt worden ist.

In dieser Ausführungsform wird die Erkenntnis genutzt, dass der Fahrer in der Regel die Bremsanlage des Kraftfahrzeugs betätigt und eine Bremskraft einstellt, wenn er ein gewisses Risiko für die Kollision mit einem Umfeldobjekt befürchtet, insbesondere, wenn sich das Umfeldobjekt vor dem Kraftfahrzeug befindet.

Eine verbundene Ausgestaltung des Verfahrens und des Systems zeichnet sich dadurch aus, dass es sich bei der das Verhalten des Fahrers charakterisierenden Größe um eine Stellung eines von dem Fahrer bedienbaren Bremspedals zur Betätigung einer Bremsanlage des Kraftfahrzeugs und/oder um einen von dem Fahrer innerhalb der Bremsanlage eingestellten Bremsdruck handelt.

Anhand der genannten Größen kann besonders einfach ermittelt werden, ob der Fahrer die Bremsanlage des Kraftfahrzeugs betätigt. Dabei sind Sensoren zur Erfassung einer oder beider der genannten Größen üblicherweise bereits zur Ausführung weiterer Assistenzfunktionen des Kraftfahrzeugs vorgesehen, und können im Rahmen der Erfindung "mitbenutzt" werden.

Eine Weiterbildung des Verfahrens und des Systems ist dadurch gekennzeichnet, dass anhand der das Verhalten des Fahrers charakterisierenden Größe eine Verhaltensweise ausgewählt wird aus einer Menge vorgegebener Verhaltensweisen, denen jeweils eine Interventionsstufe zugeordnet ist, wobei die Interventionsstufe als zweite Interventionsstufe ermittelt wird, die der ausgewählten Verhaltensweise zugeordnet ist.

Es hat sich dabei gezeigt, dass das Fahrerverhalten durch die Zuordnung der das Fahrerverhalten charakterisierenden Größe zu einer von mehreren vorgegebenen Verhaltensweisen besonders einfach und zuverlässig berücksichtigt werden kann.

Bei einer verbundenen Ausgestaltung des Verfahrens und des Systems ist es vorgesehen, dass eine oder mehrere der von der Menge vorgegebener Verhaltensweisen umfassten Verhaltensweisen ausgewählt sind aus der Gruppe umfassend
- eine erste Verhaltensweise, welche eine Veränderung der Fahrpedalstellung umfasst, die zu einer Vergrößerung eines von dem Antriebsmotor bereitgestellten Antriebsmoments führt,
- eine zweite Verhaltensweise, welche ein Beibehalten der Fahrpedalstellung innerhalb eines vorgegebenen Zeitraums umfasst,
- eine dritte Verhaltensweise, welche eine Veränderung der Fahrpedalstellung umfasst, die zu einer Verringerung eines von dem Antriebsmotor bereitgestellten Antriebsmoments führt, und
- eine vierte Verhaltensweise, welche eine Betätigung der Bremsanlage des Kraftfahrzeugs umfasst.

Mit Vorteil werden in dieser Ausgestaltung insbesondere Verhaltensweisen des Fahrers des Kraftfahrzeugs unterschieden, von denen sich gezeigt hat, dass sie typische Folgen bestimmter Einschätzungen der Kritikalität einer Fahrsituationen sind. Insbesondere entspricht die erste Verhaltensweise einer geringen von dem Fahrer wahrgenommenen Kritikalität der Fahrsituation, die dritte Verhaltensweise einer erhöhten wahrgenommenen Kritikalität der Fahrsituation und die vierte Verhaltensweise einer hohen wahrgenommenen Kritikalität der Fahrsituation. Anhand der zweiten Verhaltensweise wird vorteilhaft eine Verhaltensweise berücksichtigt, bei welcher keine Reaktion des Fahrers auf die vorliegende Fahrsituation erfolgt.

Eine Ausführungsform des Verfahrens und des Systems ist zudem dadurch gekennzeichnet, dass wenigstens eine Interventionsstufe eine Ausgabe einer Fahrwarnung und/oder eine von dem Fahrer im Wesentlichen nicht wahrnehmbare Beeinflussung der Bremsanlage des Kraftfahrzeug vorsieht, wobei diese Interventionsstufe einer Verhaltensweise des Fahrers, welche eine Veränderung der Fahrpedalstellung umfasst, die zu einer Vergrößerung eines von dem Antriebsmotor bereitgestellten Antriebsmoments führt, zugeordnet ist.

Bei dieser Ausführungsform beschränken sich die vorgenommenen Sicherheitsmaßnahmen auf eine Fahrerwarnung und/oder von dem Fahrer nicht wahrnehmbare Eingriffe in die Bremsanlage, wenn festgestellt wird, dass der Fahrer die Fahrpedalstellung derart verändert, dass sich das von dem Antriebsmotor bereitgestellte Antriebsmoment vergrößert. Hierdurch wird berücksichtigt, dass der Fahrer die Fahrsituation in der Regel nicht als kritisch einschätzt, wenn er diese Verhaltensweise zeigt, so dass heftigere Sicherheitsmaßnahmen, insbesondere wahrnehmbare Eingriffe in das Fahrverhalten des Fahrzeugs im Widerspruch zu der Situationseinschätzung des Fahrers stehen würden.

Ferner zeichnet sich eine Ausführungsform des Verfahrens und des Systems dadurch aus, dass wenigstens eine Interventionsstufe eine Beeinflussung eines Fahrverhalten des Kraftfahrzeugs vorsieht, wobei diese Interventionsstufe einer Verhaltensweise des Fahrers, welche eine Betätigung der Bremsanlage des Kraftfahrzeugs umfasst, zugeordnet ist.

Vorteilhaft wird bei dieser Ausgestaltung eine Beeinflussung des Fahrverhaltens des Fahrzeugs zugelassen, wenn der Fahrer die Bremsanlage betätigt und somit davon auszugehen ist, dass die Fahrsituation von dem Fahrer als kritisch eingestuft wird. Zur Beeinflussung des Fahrverhaltens des Kraftfahrzeugs kann dabei beispielsweise ein mittels eines entsprechenden Aktors ausgeführter Bremsvorgang und/oder ein Lenkeingriff vorgesehen sein.

Darüber hinaus zeichnet sich das erfindungsgemäße Verfahren sowie das erfindungsgemäße System dadurch aus, dass eine Objektwahrscheinlichkeit ermittelt wird, die ein Maß für die Sicherheit ist, mit der das Umfeldobjekt detektiert worden ist, wobei in Abhängigkeit von der Objektwahrscheinlichkeit eine dritte Interventionsstufe ermittelt wird und die Interventionsstufe, in der die Sicherheitsmittel angesteuert werden, auf die geringste der ersten, zweiten und dritten Interventionsstufe begrenzt wird.

Hierdurch wird berücksichtigt, dass Umfeldobjekte nicht immer mit einer hohen Genauigkeit und Zuverlässigkeit mittels der Umfeldsensorik des Kraftfahrzeugs detektiert werden können. Durch die vorgenommene Begrenzung der Interventionsstufe in Abhängigkeit von der Objektwahrscheinlichkeit können unverhältnismäßige Maßnahmen verhindert werden, wenn das Objekt bzw. seine Bewegungsdaten nur mit einer geringen Genauigkeit erfasst worden sind.

Des Weiteren wird ein Computerprogrammprodukt bereitgestellt, das ein Computerprogramm umfasst, welches Befehle zur Ausführung eines Verfahrens der zuvor beschriebenen Art auf einem Computer aufweist. Bei dem Computer kann es sich insbesondere um einen Mikrocomputer handeln, der ein Bestandteil eines in dem Kraftfahrzeugs vorhandenen Sicherheitssystems ist.

Ferner umfasst die Erfindung ein Kraftfahrzeug, das Sicherheitsmittel zur Erhöhung der Fahrsicherheit bei einer möglichen Kollision zwischen dem Kraftfahrzeug und einem Umfeldobjekt aufweist sowie ein System der zuvor beschriebenen Art zum Ansteuern der Sicherheitsmittel.

Die zuvor genannten sowie weiteren Vorteile, Besonderheiten und zweckmäßigen Ausgestaltungen der Erfindung ergeben sich aus den Unteransprüchen und der nachfolgenden Darstellung bevorzugter Ausführungsbeispiele unter Bezugnahme auf die Figuren.

### Kurze Beschreibung der Figuren

Von den Figuren zeigt:
- Fig. 1: eine schematische Blockdarstellung eines Kraftfahrzeugs mit einem erfindungsgemäß ausgestalteten Sicherheitssystem,
- Fig. 2: ein schematisches Blockdiagramm des Sicherheitssystems des in Figur 1 dargestellten Kraftfahrzeugs,
- Fig. 3: eine Veranschaulichung eines als Run-up-Schlauch bezeichneten Umfeldbereichs,
- Fig. 4: eine Veranschaulichung eines als ACC-Schlauch bezeichneten Umfeldbereichs,
- Fig. 5: eine Veranschaulichung eines als Pass-Schlauch bezeichneten Umfeldbereichs,
- Fig. 6 a)-c): jeweils ein Diagramm mit einer Kurve zur Veranschaulichung einer Teilwahrscheinlichkeit zur Berechnung einer Hypothesenwahrscheinlichkeit für eine Run-up-Hypothese,
- Fig. 7 a)-c): jeweils ein Diagramm mit einer Kurve zur Veranschaulichung einer Teilwahrscheinlichkeit zur Berechnung einer Hypothesenwahrscheinlichkeit für eine ACC-Hypothese,
- Fig. 8 a)-c): jeweils ein Diagramm mit einer Kurve zur Veranschaulichung einer Teilwahrscheinlichkeit zur Berechnung einer Hypothesenwahrscheinlichkeit für eine Pass-Hypothese,
- Fig. 9 a)-c): jeweils ein Diagramm mit einer Kurve zur Veranschaulichung einer Teilwahrscheinlichkeit zur Berechnung einer Hypothesenwahrscheinlichkeit für eine Cut-In-Hypothese,
- Fig. 10 a)-c): jeweils ein Diagramm mit einer Kurve zur Veranschaulichung einer Teilwahrscheinlichkeit zur Berechnung einer Hypothesenwahrscheinlichkeit für eine Collision-unavoidable-Hypothese,
- Fig. 11 a)-c): jeweils ein Diagramm mit einer Kurve zur Veranschaulichung einer Teilwahrscheinlichkeit zur Berechnung einer Hypothesenwahrscheinlichkeit für eine Collision- -Hypothese und
- Fig. 12: ein Diagramm zur Veranschaulichung der Bestimmung einer Interventionsstufe.

### Darstellung von Ausführungsbeispielen

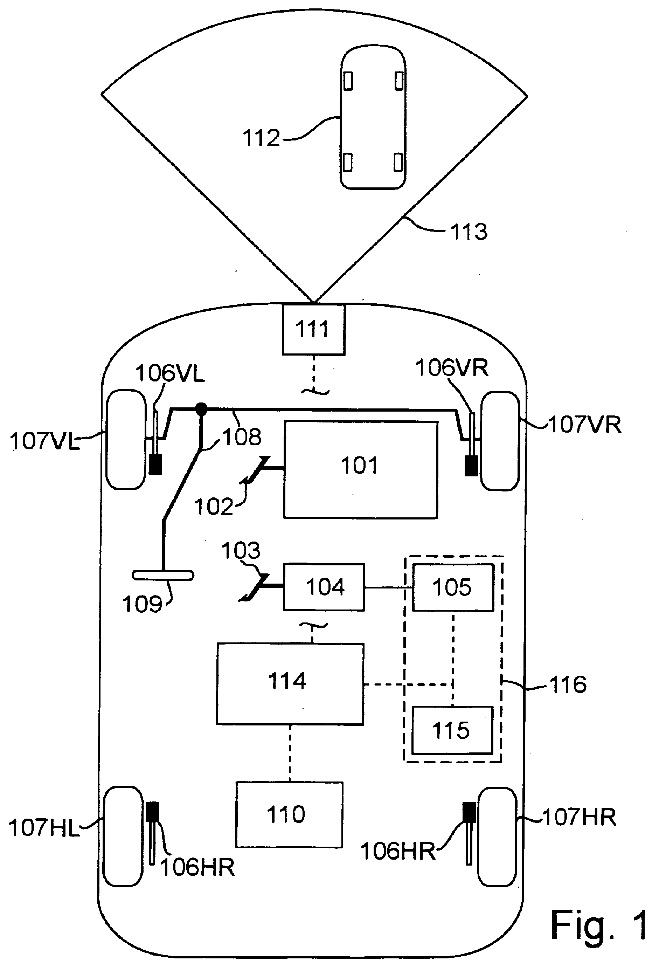

In Figur 1 ist ein Kraftfahrzeug 100 dargestellt, welches über einen Antriebsmotor 101 verfügt, der von dem Fahrer des Kraftfahrzeugs 100 mittels eines Fahrpedals 102 gesteuert wird. Ein von dem Antriebsmotor 101 bereitgestelltes Antriebsmoment wird über einen in der Figur nicht dargestellten Antriebsstrang an zwei oder alle vier Fahrzeugräder 107VL, 107VR, 107HL, 107HR übertragen, um das Kraftfahrzeug 100 anzutreiben. In der beispielhaften Darstellung sind die Vorderräder 107VL, 107VR des Kraftfahrzeugs 100 lenkbar ausgeführt und über einen Lenkstrang 108 mit einem von dem Fahrer des Kraftfahrzeugs 100 bedienbaren Lenkrad 109 verbunden. Zudem verfügt das Kraftfahrzeug 100 über eine Bremsanlage, die beispielsweise als hydraulische Bremsanlage ausgeführt ist. Von dem Fahrer des Kraftfahrzeugs 100 wird die Bremsanlage mittels eines Bremspedals 103 betätigt. Aufgrund einer Betätigung des Bremspedals 103 wird über einen in der Figur nicht dargestellten Bremskraftverstärker ein Bremsdruck in einem Hauptzylinder 104 aufgebaut. Über eine Hydraulikeinheit 105 kann der Bremsdruck an die Radbremsen 106VL, 106VR, 106HL, 106HR übertragen werden. Hierfür sind Hydraulikleitungen vorgesehen, die aus Gründen der Übersichtlichkeit in Figur 1 nicht dargestellt sind. Die Radbremsen 106VL, 106VR, 106HL, 106HR umfassen einen fahrzeugfest angebrachten Bremskolben, der gegen eine radfest montierte Bremsscheibe gepresst wird, wenn die Radbremsen 106VL, 106VR, 106HL, 106HR mit Druck beaufschlagt werden, wodurch ein Bremsmoment erzeugt wird. Die Hydraulikeinheit 105 ist in einer dem Fachmann an sich bekannten Art ausgeführt und ermöglicht eine fahrerunabhängige Einstellung des Bremsdrucks in den Radbremsen 106VL, 106VR, 106HL, 106HR. Insbesondere kann der Bremsdruck in den Radbremsen 106VL, 106VR, 106HL, 106HR mittels der Hydraulikeinheit 104 selbsttätig erhöht werden.

Ferner verfügt das Kraftfahrzeug 100 über eine Fahrzustandssensorik 110. Diese umfasse insbesondere Raddrehzahlsensoren, aus deren Signalen die Längsgeschwindigkeit des Kraftfahrzeugs 100 bestimmt werden kann, einen Gierratensensor zur Bestimmung der Gierrate des Kraftfahrzeugs 100 und gegebenenfalls einen Querbeschleunigungssensor zum Bestimmen der Querbeschleunigung des Kraftfahrzeugs 100. Vorzugsweise umfasst die Fahrzustandssensorik 110 ferner einen innerhalb des Lenkstrangs 108 angeordneten Lenkwinkelsensor zur Erfassung des Einschlagswinkels der lenkbaren Vorderräder 107VL, 107VR. Mithilfe der Messdaten der Fahrzustandssensorik 110 lässt sich insbesondere der jeweils aktuelle fahrdynamische Zustand des Kraftfahrzeugs 100 bestimmen. Über die Fahrzustandssensorik 110 hinaus weist das Kraftfahrzeug 100 zudem Sensoren auf, mittels derer der Betriebszustand einzelner Fahrzeugkomponenten ermittelt werden kann. Hierbei handelt es sich insbesondere um einen Fahrpedalsensor zum Erfassen der Fahrpedalstellung sowie einen Drucksensor zum Erfassen des in dem Hauptzylinder 104 der Bremsanlage von dem Fahrer eingestellten Bremsdrucks. Anstelle des Drucksensors kann auch ein Pedalwegsensor vorgesehen werden, der die Stellung des Bremspedals 103 erfasst. Mittels der letztgenannten Sensoren kann insbesondere das Verhalten des Fahrers bei der Längsführung des Kraftfahrzeugs 100 ermittelt werden.

Zur Erfassung von Umfeldobjekten 112 im Umfeld des Kraftfahrzeugs 100 verfügt dieses zudem über eine Umfeldsensorik 111. Die Umfeldsensorik 111 umfasst beispielsweise einen Radarsensor mit einem Erfassungsbereich 113, der einem Raumwinkelbereich vor dem Kraftfahrzeug 100 entspricht. Bei dem Radarsensor kann es sich beispielsweise um den Sensor eines in dem Kraftfahrzeug 100 vorgesehenen ACC-Systems (ACC: Adaptive Cruise Control) zur automatischen Abstandsregelung handeln, der innerhalb der vorliegenden Erfindung eine Mehrwertfunktion ausführen kann. Alternativ oder zusätzlich zu dem Radarsensor kann die Umfeldsensorik 110 beispielsweise einen Lidar-, Infrarot- oder Videosensor enthalten. Ferner kann der Erfassungsbereich 113 der Umfeldsensorik 111 mittels geeigneter Umfeldsensoren auch derart erweitert werden, dass er zusätzlich das seitliche und/oder hintere Umfeld des Kraftfahrzeugs 100 umfasst. Bei den in dem Erfassungsbereich 113 befindlichen und mittels der Umfeldsensorik 110 detektierten Umfeldobjekten 112, die im Hinblick auf eine mögliche Kollision mit dem Egofahrzeug 100 relevant sind, handelt es sich in erster Linie um weitere Kraftfahrzeuge, die sich zusammen mit dem Kraftfahrzeug 100 im Straßenverkehr bewegen. Zur sprachlichen Unterscheidung von den weiteren Kraftfahrzeugen wird das Kraftfahrzeug 100 daher im Folgenden auch als Egofahrzeug 100 bezeichnet.

Mittels der Umfeldsensorik 111 werden die Relativposition und Relativgeschwindigkeiten der in ihrem Erfassungsbereich 113 befindlichen Umfeldobjekte 112 in Bezug auf das Egofahrzeug 100 bestimmt. Als Position der Umfeldobjekte 112 wird dabei die Position von Bezugspunkten der Umfeldobjekte 112, bei denen es sich üblicherweise um den anhand der Sensordaten geschätzten Mittelpunkt der dem Egofahrzeug 100 zugewandten Objektfronten handelt. Anhand der Sensordaten wird in einer Auswertelektronik der Umfeldsensorik 111 zudem eine erste Klassifizierung der erfassten Umfeldobjekte 112 vorgenommen. Dabei werden beispielsweise anhand der erfassten Bewegung der Umfeldobjekte 112 und anhand der erfassten Umrisse der Umfeldobjekte 112, die sich im Straßenverkehr bewegenden Umfeldobjekte 112, von solchen Umfeldobjekten 112 unterschieden, die sich am Fahrbahnrand bzw. neben der Fahrbahn befinden.

Falls die Umfeldsensorik 111 einen Videosensor umfasst, können zudem Fahrspurmarkierungen erfasst werden, und die Auswertelektronik der Umfeldsensorik 111 kann aus deren Verlauf den Verlauf der Fahrbahn ermitteln, auf der sich das Egofahrzeug 100 und die am Straßenverkehr teilnehmenden Umfeldobjekte 112 bewegen. Falls die Fahrspurmarkierungen nicht mittels der eingesetzten Umfeldsensorik 111 erfasst werden können, kann der Fahrbahnverlauf unter Heranziehung von Umfeldobjekten 112, welche die Fahrbahn begrenzen - wie etwa Leitplanken - geschätzt werden. Über diese gegebenenfalls vorgesehene Verwendung hinaus werden die Umfeldobjekte 112, die nicht am Straßenverkehr teilnehmen jedoch nicht weiter betrachtet und verworfen. Im Folgenden bezeichnet der Begriff Umfeldobjekte daher nur solche Objekte im Umfeld des Egofahrzeugs 100, von denen angenommen wird, dass sie sich im Straßenverkehr bewegen.

Falls die Umfeldsensorik 111 einen in Fahrzeuglängsrichtung nach vorne gerichteten Radarsensor umfasst, wovon im Folgenden ausgegangen wird, dann können auch Umfeldobjekte 112 erfasst werden, die sich hinter dem unmittelbar vor dem Egofahrzeug 100 befindlichen Umfeldobjekt 112 befinden und von diesem verdeckt werden, sofern es sich bei dem vor dem Kraftfahrzeug befindlichen Umfeldobjekt 112 um ein Fahrzeug mit ausreichender Bodenfreiheit handelt. Der Grund hierfür ist, dass die Radarstrahlung von der Fahrbahn reflektiert wird und somit unter einen vorausfahrenden Fahrzeug hindurch auf das verdeckte Umfeldobjekt 112 trifft. Derartige verdeckte Umfeldobjekte 112 können bei der Auswertung der aktuellen Fahrsituation ebenfalls berücksichtigt werden.

Darüber hinaus stellt die Umfeldsensorik 111 Messwerte, wie etwa den Rückstreuquerschnitt eines erfassten Umfeldobjekts 112, bereit, welche Rückschlüsse über die Qualität der Detektion des Umfeldobjekts 112 zulassen.

Die mittels der zuvor beschriebenen Sensoren erfassten Daten werden innerhalb des Egofahrzeugs 100 einem Sicherheitssystem 114 zugeführt, welches anhand dieser Daten potenziell kritische Fahrsituationen erkennt und in derartigen Fahrsituationen Steuerbefehle zur Ansteuerung von Sicherheitsmitteln 116 des Egofahrzeugs 100 bestimmt.

Die Sicherheitsmittel 116 umfassen die Hydraulikeinheit 105, mit der die Bremsanlage des Egofahrzeugs 100 beeinflusst werden kann. Dabei kann etwa ein automatischer Bremsvorgang durchgeführt werden, oder die Radbremsen 106VL, 106VR, 106HL, 106HR können für einen nachfolgenden Bremsvorgang vorkonditioniert werden, indem beispielsweise ein geringer Bremsdruck aufgebaut wird, durch den ein Lüftspiel zwischen den Bremskolben und der Bremsschreibe verringert bzw. beseitigt wird. Zudem ist es möglich, Schwellen zur Auslösung bestimmter Funktionen der Hydraulikeinheit 105 zu beeinflussen, um diese Funktionen im Falle einer drohenden Kollision rascher auslösen zu können. Ein Beispiel für eine derartige Funktion ist ein an sich bekannter hydraulischer Bremsassistent (HBA), bei dem ein von dem Fahrer in der Bremsanlage eingestellter Bremsdruck in einer kritischen Fahrsituation auf einen Maximalwert erhöht wird, um eine maximale Verzögerung zu gewährleisten. Die Funktion wird üblicherweise aktiviert, wenn der Bremspedalgradient, d.h. die Geschwindigkeit, mit welcher der Fahrer das Bremspedal eintritt, oder Bremsdruckgradient, d.h. die Änderungsrate des Bremsdrucks innerhalb eines Hauptzylinders 104 der Bremsanlage, einen vorgegebenen Auslöseschwellenwert überschreitet. Durch eine Absenkung dieses Auslöseschwellenwerts kann der HBA rascher ausgelöst werden, so dass sich der Bremsweg des Egofahrzeugs 100 verkürzt.

Weitere Sicherheitsmittel 116 des Egofahrzeugs 100 sind in Figur 1 schematisch in dem Block 115 zusammengefasst. Die Sicherheitsmittel 115 umfassen Einrichtungen zur optischen, akustischen oder haptischen Warnung des Fahrers vor einer möglichen Kollision mit einem Umfeldobjekt 112. Optische Warnungen können beispielsweise mittels eines von dem Fahrer des Egofahrzeugs 100 einsehbaren Displays und/oder mittels einer Warnleuchte ausgegeben werden, die etwa in einer Armaturentafel des Egofahrzeugs 100 angeordnet ist. Akustische Warnungen umfassen beispielsweise Warntöne, die mittels eines Lautsprechers bzw. mittels eines in dem Egofahrzeug 100 vorgesehenen Audiosystems ausgegeben werden können. Haptische Warnungen können etwa mittels eines in dem Lenkstrang 108 angeordneten Lenkaktors ausgegeben werden, indem dieser das Lenkrad 109 kurzzeitig mit einem Drehmoment beaufschlagt. Alternativ oder zusätzlich kann das Egofahrzeug 100 auch durch eine kurzzeitige mittels der Hydraulikeinheit 105 ausgeführten Bremsdruckerhöhung abgebremst werden, so dass ein Bremsruck verursacht wird, welcher den Fahrer auf eine Gefahrsituation aufmerksam macht.

Darüber hinaus umfassen die Sicherheitsmittel 115 vorzugsweise eine oder mehrere Einrichtungen zur Erhöhung der passiven Fahrzeugsicherheit. Insbesondere können dabei reversible Gurtstraffer eingesetzt werden, mit denen die von den Fahrzeuginsassen angelegten Sicherheitsgurte angezogen werden können, um die Fahrzeuginsassen im Falle einer Kollision besser sichern zu können. Darüber hinaus können in dem Egofahrzeug 100 Einrichtungen zum Verstellen der Sitzposition der Fahrzeuginsassen vorgesehen werden, welche die Fahrzeuginsassen durch eine Verstellung der Sitze in eine günstige Position bringen, sowie Einrichtungen, mit denen Fenster und/oder ein Schiebedach des Egofahrzeugs 100 bei einer drohenden Kollision geschlossen werden können, um das Eindringen von Gegenständen in das Egofahrzeug 100 zu verhindern. Ferner können die Sicherheitsmittel 115 Einrichtungen zur Vorkonditionierung von irreversiblen Sicherheitsmitteln, wie Airbags und/oder pyrotechnischen Gurtstraffern, umfassen, welche die Auslöseschwellen der irreversiblen Sicherheitsmitteln im Falle einer möglichen Kollision herabsetzen, so dass die irreversiblen Sicherheitsmittel bei einer Kollision rascher ansprechen.

Darüber hinaus können die Sicherheitsmittel 115 beispielsweise auch einen Aktor zum Blockieren des Fahrpedals 102 umfassen, mit dem insbesondere verhindert werden kann, dass der Fahrer das Egofahrzeug 100 in einer kritischen Fahrsituation beschleunigt.

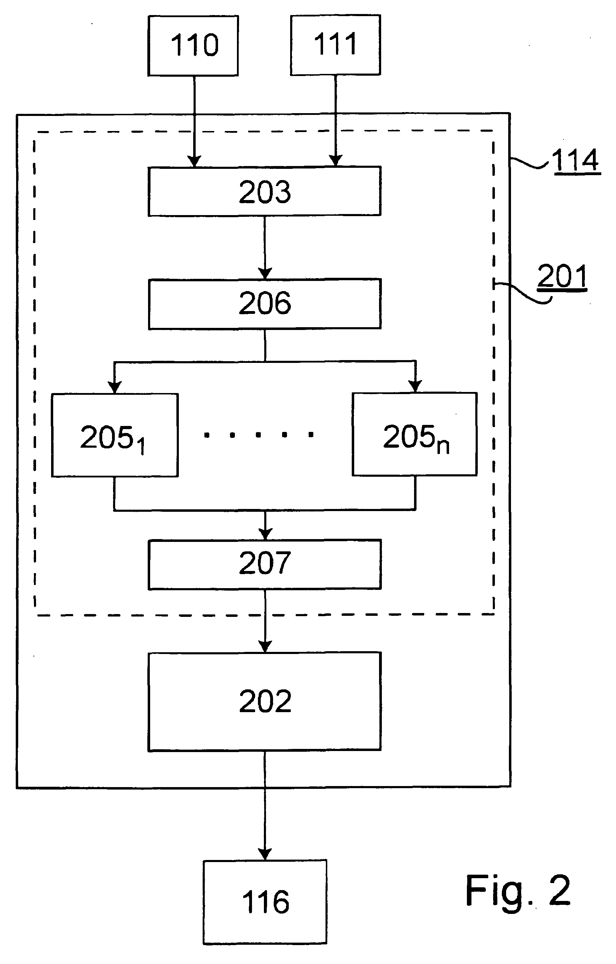

Das Sicherheitssystem 114 ist in der Figur 2 anhand eines schematischen Blockdiagramms näher dargestellt. Es umfasst eine Situationsanalyseeinrichtung 201, welche eine Analyse der aktuellen Fahrsituationen vornimmt und die ermittelte Fahrsituation im Hinblick auf die Gefahr von Kollisionen bewertet, sowie einen Gefahrenrechner 202, welcher in Abhängigkeit von der in der Situationsanalyseeinrichtung 201 vorgenommenen Bewertung der aktuellen Fahrsituation Signale zur Ansteuerung der Sicherheitsmittel 116 bestimmt und an die Sicherheitsmittel 116 bzw. die zur Steuerung der Sicherheitsmittel 116 vorgesehenen Aktoren sendet. Die Situationsanalyseeinrichtung 201 umfasst eine Auswerteeinrichtung 203, in der eine Analyse der vorliegenden Fahrsituationen vorgenommen wird. Dabei werden insbesondere Größen in Bezug auf die erfassten Umfeldobjekte 112 ermittelt, die für die nachfolgende Bewertung der Fahrsituationen und für die Ermittlung der Steuerbefehle für die Ansteuerung der Sicherheitsmittel 116 herangezogen werden. Die Bewertung der Fahrsituation wird in den n Hypothesenblöcken 205₁,..., 205ₙ vorgenommen. Darüber hinaus umfasst die Situationsanalyseeinrichtung 201 eine erste Vorfilterungseinrichtung 206 sowie eine zweite Vorfilterungseinrichtung 207.

In der Auswerteeinrichtung 203 werden die von der Umfeldsensorik 111 und der Fahrzustandssensorik 110 bereitgestellten Daten ausgewertet, um für die mittels der Umfeldsensorik 111 erfassten Umfeldobjekte 112 die Größen zu ermitteln, die für die nachfolgende Bewertung der aktuellen Fahrsituation herangezogen werden. In einer dem Fachmann grundsätzlich bekannten Weise werden dabei zunächst anhand der Bewegungsdaten der erfassten Umfeldobjekte 112 Trajektorien der Umfeldobjekte 112 berechnet. Ferner wird anhand der mittels der Fahrzustandssensorik 110 erfassten Daten eine Trajektorie des Egofahrzeugs 100 berechnet. Vorzugsweise geht in die Berechnung der Trajektorien der Umfeldobjekte 112 und des Egofahrzeugs 100 auch der ermittelte bzw. geschätzte Fahrbahnverlauf ein, da davon ausgegangen werden kann, dass das Egofahrzeug 100 sowie die Umfeldobjekte 112 im Wesentlichen der Fahrbahn folgen werden. Der Fahrbahnverlauf stellt dabei eine Randbedingung dar, die zumindest zur Plausibilisierung der Trajektorien herangezogen werden kann.

Anhand der Trajektorien der Umfeldobjekte 112 und des Eigenfahrzeugs 100 wird dann für jedes Umfeldobjekt 112 unter der Annahme stationärer Bedingungen die Zeitspanne bis zu dem Kollisionszeitpunkt berechnet, in dem sich das Egofahrzeug bzw. dessen Front auf gleicher Höhe wie das Umfeldobjekt 112 befindet. Diese Zeitspanne wird im Folgenden als TTC (time to collision) bezeichnet. Für die Umfeldobjekte 112, für die eine TTC berechnet worden ist, die kleiner als ein vorgegebener Schwellenwert TTC_{Schwelle} ist, wird zudem die Verzögerung des Egofahrzeugs 100 bestimmt, die erforderlich ist, um durch einen Bremsvorgang zu vermeiden, dass die Fahrzeugfront auf gleiche Höhe mit dem Umfeldobjekt 112 gelangt. Diese Verzögerung wird im Folgenden auch als Kollisionsvermeidungsverzögerung bezeichnet. Ferner wird in Bezug auf diese Umfeldobjekte 112 eine Querbeschleunigung berechnet, die erforderlich ist, um eine Kollision mit dem Umfeldobjekt 112 durch ein Ausweichmanöver bzw. ein Abweichen von der berechneten Trajektorie des Egofahrzeugs 100 ohne Durchführung eines Bremseneingriffs zu vermeiden. Diese Querbeschleunigung wird im Folgenden als Ausweichquerbeschleunigung bezeichnet. Zur Bestimmung der TTC, der Kollisionsvermeidungsverzögerung und der Ausweichquerbeschleunigung kann dabei grundsätzlich jedes dem Fachmann bekannte Verfahren eingesetzt werden. Ein bekanntes Verfahren zur Bestimmung dieser Größen ist beispielsweise in der internationalen Patentanmeldung WO 2005/082681 A1 beschrieben.

Falls es sich bei dem Umfeldobjekt 112 um ein gegebenenfalls berücksichtigtes verdecktes Umfeldobjekt 112 handelt, dann werden die TTC, die Kollisionsvermeidungsverzögerung und die Ausweichquerbeschleunigung für dieses Umfeldobjekt 112 unter Berücksichtigung des verdeckenden Umfeldobjekts 112 bestimmt. Dies kann beispielsweise dadurch erfolgen, dass eine Entfernung zwischen dem verdeckten Umfeldobjekt 112 und dem Egofahrzeug 100 angenommen wird, die um die Längsausdehnung des verdeckenden Umfeldobjekts 112 zuzüglich eines Abstands zwischen dem verdeckenden und dem verdeckten Umfeldobjekt 112 verringert ist.

Für die Umfeldobjekte 112, denen einen TTC zugeordnet wurde, die kleiner als der Schwellenwert TTC_{Schwelle} ist, wird zudem ein Abstand zwischen der berechneten Trajektorie des Egofahrzeugs 100 und der aktuellen Position des entsprechenden Umfeldobjekts 112 ermittelt. Dieser Abstand, der im Folgenden auch als Lateralversatz Δy des Objekts bezeichnet wird, entspricht dem Abstand der sich zwischen Egofahrzeug 100 und dem Umfeldobjekt 112 einstellt, wenn das Umfeldobjekt 112 an seiner aktuellen Position festgehalten wird und das Egofahrzeug 100 entlang seiner Trajektorie solange verschoben wird, bis sich seine Front auf gleicher Höhe mit dem Umfeldobjekt 112 befindet. Die Strecke, um die das Egofahrzeug 100 auf seiner berechneten Trajektorie verschoben werden müsste, damit seine Front sich auf gleicher Höhe mit dem Umfeldobjekt 112 befindet, wird im Folgenden auch kurz als Entfernung zwischen dem Egofahrzeug 100 und dem Umfeldobjekt 112 bezeichnet. Zudem wird die Geschwindigkeitskomponente der aktuellen Geschwindigkeit des Umfeldobjekts 112 ermittelt, die an dem Punkt senkrecht zu der berechneten Trajektorie des Egofahrzeugs 100 steht, in dem sich die Front des Egofahrzeugs 100 auf gleicher Höhe mit dem Umfeldobjekt 112 befindet. Diese Geschwindigkeitskomponente wird im Folgenden als Lateralgeschwindigkeit v_{y} des Umfeldobjekts 112 gerichtet ist.

Darüber hinaus wird für die Umfeldobjekte 112 mit einer TTC, die kleiner als der Schwellenwert TTC_{Schwelle} ist, eine Objektwahrscheinlichkeit bestimmt. Die Objektwahrscheinlichkeit ist ein Maß für die Sicherheit dafür, dass ein Umfeldobjekt 112 tatsächlich korrekt von der Umfeldsensorik 111 erfasst worden ist und wird in Abhängigkeit von dem Rückstreuquerschnitt des Umfeldobjekts 112 berechnet. Ferner wird das erfasste Bewegungsmuster des Umfeldobjekts 112 bei der Bestimmung der Objektwahrscheinlichkeit berücksichtigt, da dieses ebenfalls Rückschlüsse darauf zulässt, ob es sich um ein relevantes Umfeldobjekt 112 handelt.

Nach der Verarbeitung der von der Umfeldsensorik 111 und der Fahrzustandssensorik 110 bereitgestellten Daten in der Auswerteeinrichtung liegt somit für jedes Umfeldobjekt 112 insbesondere die ihm zugeordnete TTC vor. Für die Umfeldobjekte 112, denen eine TTC zugeordnet ist, die kleiner als der Schwellenwert TTC_{Schwelle} ist, liegen zudem folgende Daten vor:
- Die Kollisionsvermeidungsverzögerung,
- die Ausweichquerbeschleunigung,
- der Lateralversatz Δy,
- die Lateralgeschwindigkeit v_{y} und
- die Objektwahrscheinlichkeit.

Anhand der Informationen über die TTC und den Lateralversatz Δy wird in der Vorfilterungseinrichtung 206 eine Vorauswahl der relevanten Umfeldobjekte 112 vorgenommen, bei der die Umfeldobjekte 112 verworfen werden, bei denen in naher Zukunft eine Kollision mit dem Egofahrzeug 100 unmöglich oder zumindest höchst unwahrscheinlich ist. Insbesondere werden dabei die Umfeldobjekte 112 verworfen, denen eine TTC zugeordnet ist, die größer als der Schwellenwert TTC_{Schwelle} oder unendlich ist. Gleichfalls werden Umfeldobjekte 112 verworfen, für die eine Kollisionsvermeidungsverzögerung ermittelt worden ist, die größer als ein vorgegebener Schwellenwert ist. Ferner werden Umfeldobjekte 112 verworfen, deren Lateralversatz Δy größer als ein vorgegebener Schwellenwert ist, der dem Zweifachen einer Fahrspurbreite entspricht. Hierbei handelt es sich um Umfeldobjekte 112, die sich weder in derselben Fahrspur 301 wie das Egofahrzeug 100 noch in einer benachbarten Fahrspur 302 befinden. Als Fahrspurbreite wird dabei in einer Ausführungsform ein fest vorgegebener Wert zugrunde gelegt, der in etwa der Breite einer typischen Fahrspur entspricht. Vorzugsweise werden zudem alle Umfeldobjekte 112 verworfen, deren Absolutgeschwindigkeit über einen längeren Zeitraum den Wert 0 hatte, d.h. alle stehenden Umfeldobjekte 112, deren Anhalten nicht beobachtet worden ist.

Durch die Vorfilterung wird die weitere Datenverarbeitung auf die relevanten Umfeldobjekte 112 beschränkt, die potenziell "gefährlich" sind, d.h. auf die Umfeldobjekte 112, mit denen eine Kollision innerhalb der anhand des Schwellenwerts TTC_{Schwelle} vorgegebenen Zeitspanne nicht ausgeschlossen werden kann. Die Vorfilterung ist dabei sinnvoll, um die Rechenkapazität, die für die weitere Verarbeitung der Daten der Umfeldobjekte 112 erforderlich ist, einschränken zu können bzw. die Datenverarbeitungsgeschwindigkeit zu erhöhen.

Für jedes relevante Umfeldobjekt 112, das bei der Vorfilterung nicht verworfen worden ist, wird in den Hypothesenblöcken 205₁,...,205ₙ jeweils geprüft, ob auf das Umfeldobjekt 112 eine dem entsprechenden Hypothesenblock 205₁,...,205ₙ zugeordnete Situationshypothese anwendbar ist. Die in den verschiedenen Hypothesenblöcken 205₁,... ,205ₙ auf ihre Anwendbarkeit hin geprüften Situationshypothesen beziehen sich auf typische, im Straßenverkehr auftretende Fahrsituationen, in denen zumindest potenziell die Gefahr für eine Kollision zwischen dem Egofahrzeug 100 und dem Umfeldobjekt 112 besteht, und die anhand der Daten unterscheidbar sind, die aus den Messsignalen der vorhandenen Umfeldsensorik 111 und Fahrzustandssensorik 110 ermittelt werden können. Anhand der Hypothesen werden diese Situationen im Hinblick auf ihre Kritikalität unterschieden, so dass die Kritikalität der in Bezug auf einem Umfeldobjekt 112 vorliegenden Fahrsituation aus der Art der auf das Umfeldobjekt 112 anwendbaren Hypothese abgeleitet werden kann.

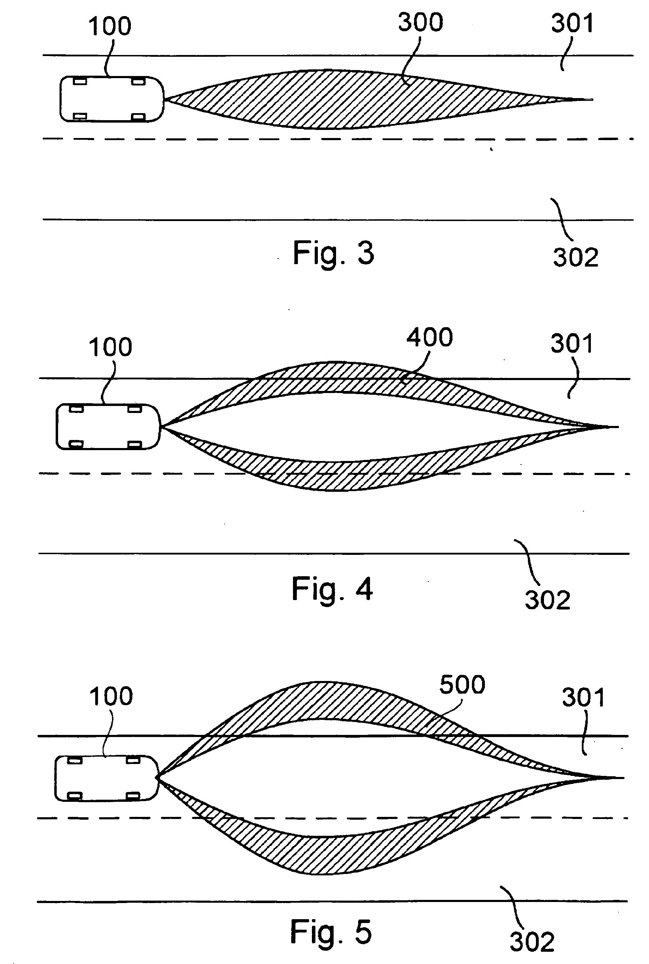

Die Anwendbarkeit einer Hypothese auf ein Umfeldobjekt 112 ergibt sich aus dem Lateralversatz Δy des Umfeldobjekts 112, der ihm zugeordneten TTC sowie der ihm zugeordneten Kollisionsvermeidungsverzögerung. In Bezug auf die TTC und die Kollisionsvermeidungsverzögerung sind dabei vorzugsweise für jede Hypothese Wertebereiche anhand von Schwellenwerten vorgegeben, und die Anwendbarkeit einer Hypothese wird festgestellt, wenn die Größen in den vorgegebenen Wertebereichen liegen. In Bezug auf den Lateralversatz Δy eines Umfeldobjekts 112 ist für jede Hypothese vorzugsweise ein vor dem Egofahrzeug 100 liegender Umfeldbereich vorgegeben, der im Folgenden als Schlauch bezeichnet wird, in dem sich das Umfeldobjekt 112 befinden muss, um die Anwendbarkeit der Hypothese feststellen zu können. Die Schläuche entsprechen Wertebereichen des Lateralversatzes Δy eines Umfeldobjekts 112, die in Abhängigkeiten von der Strecke vorgegeben sind, die das Egofahrzeug100 auf seiner berechneten Trajektorie zurücklegen müsste, damit sich eines Front auf gleicher Höhe mit dem Umfeldobjekt 112 befindet. Für eine geradlinige Bewegung des Egofahrzeugs 100 sind verschiedene Schläuche 300, 400 und 500 in den Figuren 3, 4 und 5 veranschaulicht. Falls die Trajektorie des Egofahrzeugs 100 eine Kurve beschreibt, sind die Schläuche gekrümmt, so dass insbesondere ihre Mittellinie auf der Trajektorie des Egofahrzeugs 100 liegt. Wie aus den Figuren ersichtlich, erstrecken sich die Schläuche 300, 400, 500 linsenförmig entlang der berechneten Trajektorie des Egofahrzeugs 100 und werden mit zunehmender Entfernung vom Egofahrzeug 100 schmaler. Hierdurch wird berücksichtigt, dass die berechnete Trajektorie für größere Entfernungen bzw. größere Zeiträume ungenauer und unsicherer wird, und es wird verhindert, dass eine Hypothese angewendet wird, obwohl die zugrunde gelegten Daten eine hohe Unsicherheit aufweisen.

Für jede vorgegebene Hypothese ist in der Situationsanalyseeinrichtung 201 ein Hypothesenblock 205₁; ... ;205ₙ vorgesehen. In jedem Hypothesenblock 205₁; ... ;205ₙ wird für jedes Umfeldobjekt 112, das nicht in der Vorfilterungseinrichtung 206 verworfen worden ist, überprüft, ob die jeweilige Hypothese auf das Umfeldobjekt 112 anwendbar ist. Falls eine Hypothese auf ein Umfeldobjekt 112 anwendbar ist, wird für dieses Umfeldobjekt 112 zudem eine Hypothesenwahrscheinlichkeit berechnet. Diese ist ein Maß für die Sicherheit, mit der die Hypothese auf das betreffende Umfeldobjekt 112 tatsächlich zutrifft.

Grundsätzlich können dabei beliebig viele Situationshypothesen vorgegeben werden, deren Anwendbarkeit auf ein bestimmtes Umfeldobjekt 112 jeweils in einem Hypothesenblock 205₁,...,205ₙ geprüft wird. Im Hinblick auf eine Einsparung benötigter Rechenkapazität bzw. eine Erhöhung der Datenverarbeitungsgeschwindigkeit in dem Sicherheitssystem 114 ist es jedoch vorteilhaft, eine begrenzte Anzahl relevanter Hypothesen vorzugeben. In einer Ausführungsform der Erfindung sind daher sechs Hypothesen vorgegeben, die beispielsweise als Run-up-Hypothese, ACC-Hypothese, Pass-Hypothese, Cut-in-Hypothese, Collision-unavoidable-Hypothese und Collision-Hypothese bezeichnet werden. Im Folgenden werden diese Hypothesen und die Kriterien für ihre Anwendbarkeit näher erläutert:

### 1. Run-up-Hypothese

Die Run-up-Hypothese bezieht sich auf Situationen, in denen sich das Egofahrzeug 100 einem Umfeldobjekt 112 nähert, das sich in derselben Fahrspur 301 befindet wie das Egofahrzeug 100, welches jedoch so weit von dem Umfeldobjekt 112 entfernt ist, dass ausreichend Zeit für die Vermeidung einer Kollision durch ein Ausweichen und/oder Bremsen zur Verfügung steht.

Für die Run-up-Hypothese kommen nur Umfeldobjekte 112 in Betracht, deren Lateralversatz Δy gering ist. Dabei wird ein Run-Up-Schlauch 300 vorgegeben, der für den Fall einer geradlinigen Bewegung des Egofahrzeugs 100 in Figur 3 dargestellt ist. Entsprechend den zuvor beschriebenen Fahrsituationen, auf die sich die Hypothese bezieht, entspricht die maximale Breite des Run-up-Schlauchs 300 der Breite einer Fahrspur. Umfeldobjekte 112 die sich außerhalb des Run-up-Schlauchs befinden, werden in Bezug auf die Run-up-Hypothese verworfen. Darüber hinaus werden Umfeldobjekte 112 verworfen, denen eine TTC zugeordnet ist, die kleiner als ein Schwellenwert TTC_{Run-up} ist, und für die Kollisionsvermeidungsverzögerung ermittelt worden ist, die größer als ein vorgegebener Schwellenwert ist. Die Schwellenwerte sind so gewählt, dass Umfeldobjekte 112 verworfen werden, bei denen eine Kollision mit dem Egofahrzeug 100 nicht mehr oder kaum noch auszuschließen ist. Für diese Umfeldobjekte 112 ist eine andere Hypothese anwendbar, namentlich die weiter unten beschriebene Collision-unavoidable-Hypothese oder die ebenfalls weiter unten beschriebene Collision-Hypothese.

Für die Umfeldobjekte 112, auf welche die Run-up-Hypothese gemäß den zuvor genannten Kriterien anwendbar ist, wird jeweils eine Hypothesenwahrscheinlichkeit berechnet. Wie bereits erwähnt, ist die Hypothesenwahrscheinlichkeit ein Maß dafür, mit welcher Sicherheit die Hypothese tatsächlich auf ein Umfeldobjekt 112 zutrifft. Für die Run-up-Hypothese und die nachfolgend beschriebenen Hypothesen wird die Hypothesenwahrscheinlichkeit für ein Umfeldobjekt 112 in Abhängigkeit von der dem Umfeldobjekt 112 zugeordneten TTC, dem Lateralversatz Δy des Umfeldobjekts 112 und seiner Lateralgeschwindigkeit v_{y} bestimmt. Dabei ist vorzugsweise vorgesehen, dass jeweils eine Teilwahrscheinlichkeit pᵢ,_{Run-up} (i = 1, 2, 3) in Abhängigkeit von einer der drei zuvor genannten Größen bestimmt wird, und die Hypothesenwahrscheinlichkeit für das Umfeldobjekt 112 als Funktion der einzelnen Teilwahrscheinlichkeiten berechnet wird. In einer Ausführungsform wird die Hypothesenwahrscheinlichkeit dabei als Produkt der Teilwahrscheinlichkeiten bestimmt. Gleichfalls können die Teilwahrscheinlichkeiten auch mit unterschiedlichen Gewichten in die Hypothesenwahrscheinlichkeit eingehen.

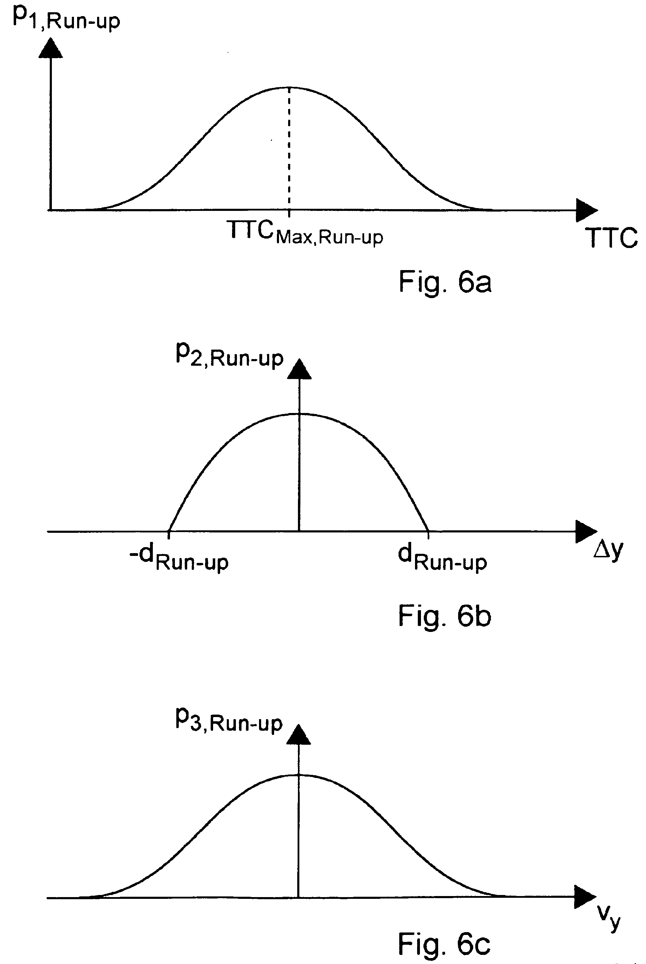

In Figur 6a ist die Teilwahrscheinlichkeit p_{1,Run-up} gezeigt, die in Abhängigkeit von der für das Umfeldobjekt 112 bestimmten TTC ermittelt wird. Die Wahrscheinlichkeit p_{1,Run-up} ist für kleine TTC klein und steigt mit zunehmender TTC bis auf den Wert 1 an, der für TTC = TTC_{Max,Run-up} angenommen wird. Für größere TTC nimmt die Wahrscheinlichkeit p_{1,Run-up} ab.

In Figur 6b ist die Wahrscheinlichkeit p_{2,Run-up} veranschaulicht, die in Abhängigkeit von dem Lateralversatz Δy des Umfeldobjekts 112 bestimmt wird. Entsprechend der Form des Run-up-Schlauchs 300 hat die Wahrscheinlichkeit p_{2,Run-up} für Objekte, deren Lateralversatz Δy betragsmäßig größer als der Schwellenwert d_{Run-up} ist, den Wert 0. Der Schwellenwert d_{Run-up} entspricht der halben Breite des Run-up-Schlauchs 300 und wird für jedes Umfeldobjekt 112 in Abhängigkeit von seiner Entfernung zu dem Egofahrzeug 100 ermittelt, d.h. von der Strecke, die das Egofahrzeug 100 auf seiner Trajektorie zurücklegen müsste, damit seine Front sich auf gleicher Höhe mit dem Umfeldobjekt 112 befindet. Ihren Maximalwert nimmt die Wahrscheinlichkeit p_{2,Run-up} an, wenn sich das Umfeldobjekt 112 in der Mitte des Run-Up-Schlauchs 300 befindet. Mit zunehmender Annäherung des Umfeldobjekts 112 an den Rand des Run-up-Schlauchs 300 nimmt die Wahrscheinlichkeit p_{2,Run-up} ab.

In Figur 6c ist die Wahrscheinlichkeit p_{3,Run-up} veranschaulicht, die in Abhängigkeit von der Lateralgeschwindigkeit v_{y} des Umfeldobjekts 112 ermittelt wird. Die Wahrscheinlichkeit p_{3,Run-up} nimmt den Maximalwert für Lateralgeschwindigkeiten v_{y} = 0 an und sinkt mit sich betragsmäßig vergrößernden Werten der Lateralgeschwindigkeit v_{y} auf den Wert 0. Hierdurch wird berücksichtigt, dass Objekte mit hoher Lateralgeschwindigkeit v_{y} die Fahrspur 301 des Egofahrzeugs 100 mit hoher Wahrscheinlichkeit verlassen, so dass ein Auffahren des Egofahrzeugs 100 auf ein solches Umfeldobjekt 112 mit hoher Wahrscheinlichkeit vermieden wird.

### 2. ACC-Hypothese

Die ACC-Hypothese bezieht sich gleichfalls auf Situationen, in denen sich das Egofahrzeug 100 einem Umfeldobjekt 112 nähert, das sich vor dem Egofahrzeug 100 befindet, jedoch so weit von dem Umfeldobjekt 112 entfernt ist, dass ausreichend Zeit zur Vermeidung einer Kollision zwischen dem Egofahrzeug 100 und dem Umfeldobjekt 112 besteht. Im Gegensatz zu der Run-up-Hypothese bezieht sich die ACC-Hypothese jedoch auf Umfeldobjekte 112, die sich eher am Rand der Fahrspur 301 des Egofahrzeugs 100 befinden. Daher wird für die ACC-Hypothese ein ACC-Schlauch 400 vorgegeben, welcher die in Abbildung 4 dargestellte Form aufweist. Der ACC-Schlauch 400 hat eine größere Breite als der Run-up-Schlauch 300, ist jedoch in der Mitte in etwa in der Form des Run-up-Schlauchs freigestellt, so dass sich voneinander getrennte Umfeldbereiche ergeben, die von dem ACC-Schlauch 400 umfasst sind. An der Stelle der maximalen Breite des ACC-Schlauchs 400 entspricht die Entfernung zwischen den Mitten dieser Bereiche in etwa der Breite einer Fahrspur. Umfeldobjekte 112, die sich nicht innerhalb des ACC-Schlauchs 400 befinden, werden in Bezug auf die ACC-Hypothese verworfen. Analog zu den Kriterien für die Anwendbarkeit der Run-up-Hypothese werden zudem Umfeldobjekte 112 für die ACC-Hypothese verworfen, denen eine TTC zugeordnet ist, die kleiner als ein Schwellenwert TTC_{Run-up} ist, und für die die Kollisionsvermeidungsverzögerung ermittelt worden ist, die größer als ein vorgegebener Schwellenwert ist.

Für die Umfeldobjekte 112, auf welche die ACC-Hypothese gemäß den zuvor beschriebenen Kriterien anwendbar ist, wird die Hypothesenwahrscheinlichkeit aus den Teilwahrscheinlichkeiten p_{i,ACC} (i = 1, 2, 3) bestimmt.

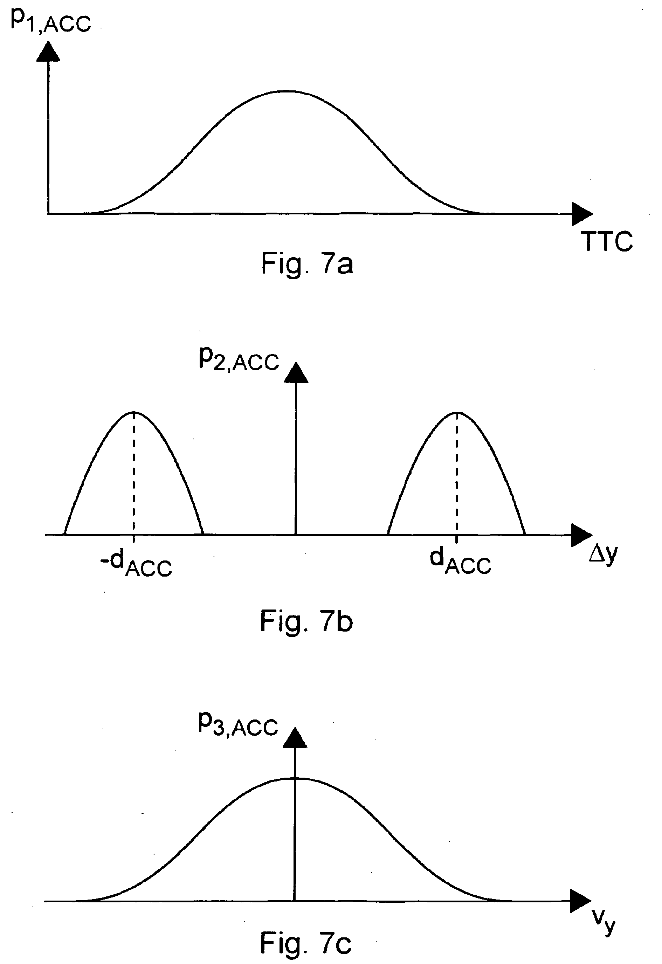

Die aus der dem betreffenden Umfeldobjekt 112 zugeordneten TTC berechnete Teilwahrscheinlichkeit p_{1,ACC}, die in Figur 7a veranschaulicht ist sowie die in Figur 7c veranschaulichte Teilwahrscheinlichkeit p_{3,ACC}, die in Abhängigkeit von der Lateralgeschwindigkeit v_{y} des Umfeldobjekts 112 bestimmt wird, entsprechen dabei den bereits im Zusammenhang mit der Run-up-Hypothese erläuterten Teilwahrscheinlichkeiten p_{1,Run-up} und p_{3,Run-up}.

In Abhängigkeit von dem Lateralversatz Δy wird die in Figur 7b veranschaulichte Teilwahrscheinlichkeit p_{2,ACC} berechnet. Wie aus der Figur 7b ersichtlich, nimmt die Teilwahrscheinlichkeit den Wert 0 für Umfeldobjekte 112 an, die sich außerhalb des ACC-Schlauchs 400 befinden. Die Wahrscheinlichkeit p_{2,ACC} nimmt das Maximum an für Umfeldobjekte 112, die sich in der Mitte eines der beiden durch einen Zwischenraum getrennten Bereiche des ACC-Schlauchs 400 befinden. Der halbe Abstand zwischen den Mitten dieser Bereiche hat dabei den Wert d_{ACC}. Der Wert d_{ACC} wird entsprechend der Form des ACC-Schlauchs 400 in Abhängigkeit von der Entfernung zwischen dem Umfeldobjekt 112 und dem Egofahrzeug 100 bestimmt, d.h., in Abhängigkeit von der Strecke, die das Egofahrzeug 100 auf seiner berechneten Trajektorie zurücklegen müsste, damit sich seine Front auf gleicher Höhe mit dem Umfeldobjekt 112 befindet. Je näher sich ein Umfeldobjekt 112 an den Rändern des ACC-Schlauchs 400 befindet, desto kleiner ist die Wahrscheinlichkeit p_{2,ACC}.

### 3. Pass-Hypothese

Die Pass-Hypothese bezieht sich auf Situationen, in denen sich das Egofahrzeug 100 einem Umfeldobjekt 112 nähert, welches sich vor dem Egofahrzeug 100 in einer der Fahrspur 301 des Egofahrzeugs 100 benachbarten Fahrspur 302 befindet, wobei eine hohe Wahrscheinlichkeit dafür besteht, dass das Egofahrzeug 100 das Umfeldobjekt 112 passieren wird, ohne dass es zu einer Kollision kommt. Typischerweise umfassen diese Situationen Überholvorgänge, bei denen sich das von dem Egofahrzeug 100 überholte Umfeldobjekt 112 in einer zu der Fahrspur 301 des Egofahrzeugs 100 benachbarten Fahrspur 302 befindet.

Daher wird für die Pass-Hypothese ein Pass-Schlauch 500 vorgegeben, der die in Figur 5 veranschaulichte Form hat. Die Form des Pass-Schlauchs 500 entspricht im Wesentlichen der des ACC-Schlauchs 400. Der Pass-Schlauch 500 ist jedoch im Vergleich mit dem ACC-Schlauch 400 in Querrichtung gestreckt, so dass er anstelle des Randes der Fahrspur 301 des Egofahrzeugs 100 die benachbarten Fahrspuren 302 abdeckt. Umfeldobjekte 112, die sich nicht innerhalb des Pass-Schlauchs 500 befinden, werden für die Pass-Hypothese verworfen. Gleichfalls werden Umfeldobjekte 112 für die Pass-Hypothese verworfen, deren Lateralgeschwindigkeit v_{y} betragsmäßig größer als ein vorgegebener Schwellenwert V_{y,Pass} ist. Falls es sich in Richtung der Trajektorie des Egofahrzeugs 100 bewegen, kommt für ein Umfeldobjekt 112 eine Anwendbarkeit der noch zu beschreibenden Cut-in-Hypothese in Betracht, falls es sich von der Trajektorie des Egofahrzeugs 100 weg bewegt, braucht ein Umfeldobjekt 112 im Hinblick auf eine mögliche Kollision mit dem Egofahrzeug 100 nicht berücksichtigt zu werden.

Für die Umfeldobjekte 112, auf welche die Pass-Hypothese gemäß den zuvor beschriebenen Kriterien anwendbar ist, wird jeweils die Hypothesenwahrscheinlichkeit aus den Teilwahrscheinlichkeiten p_{i,Pass} (i = 1, 2, 3).

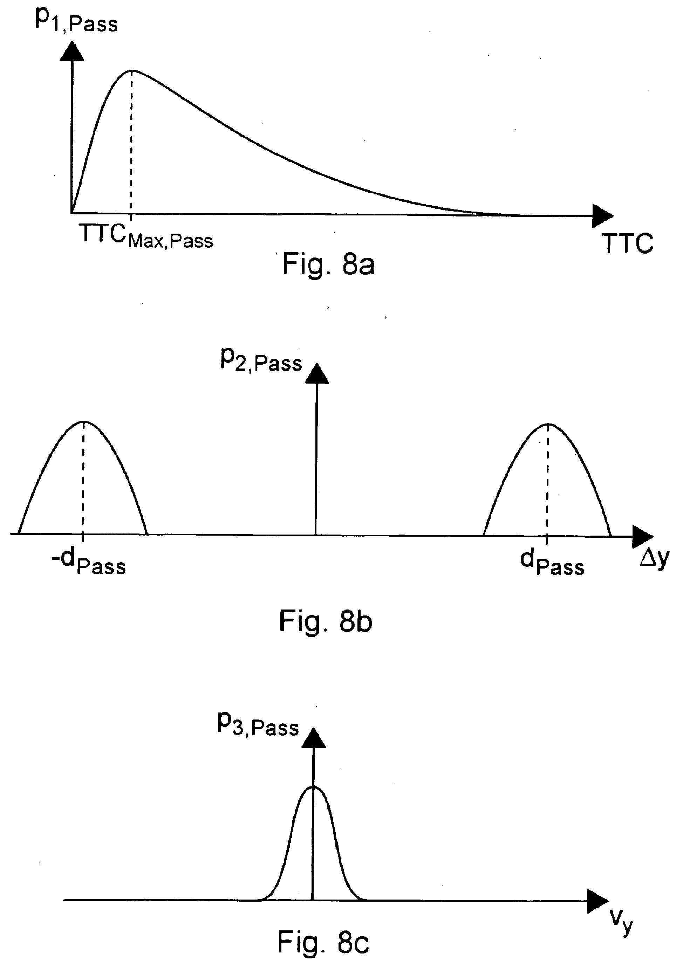

In dem Diagramm in Figur 8a ist die Teilwahrscheinlichkeit p_{1,Pass} veranschaulicht, die in Abhängigkeit von der dem betreffenden Umfeldobjekte 112 zugeordneten TTC ermittelt wird. Die Teilwahrscheinlichkeit p_{1,Pass} besitzt ein Maximum bei dem Wert TTC_{Max,Pass} und nimmt mit steigender TTC ab. Der Wert TTC_{Max,Pass} wird dabei so festgelegt, dass eine Kollision im Falle eines Fahrspurwechsels des Umfeldobjekts 112 auf die Fahrspur 301 des Egofahrzeugs 100 nur durch heftige Eingriffe in das Fahrverhalten des Egofahrzeugs 100 zu vermeiden wäre.

In Figur 8b ist die in Abhängigkeit von dem Lateralversatz Δy des Umfeldobjekts 112 bestimmte Teilwahrscheinlichkeit p_{2,Pass} veranschaulicht. Diese Teilwahrscheinlichkeit ist für Umfeldobjekte 112 maximal, die sich in der Mitte eines der beiden durch den Zwischenraum getrennten Bereiche des Pass-Schlauchs 500 befinden. Der halbe Abstand zwischen den Mitten dieser Bereich hat dabei den Wert d_{Pass}. Der Wert d_{Pass} wird entsprechend der Form des Pass-Schlauchs 500 in Abhängigkeit von der Entfernung zwischen dem Umfeldobjekt 112 und dem Egofahrzeug 100 bestimmt, d.h., in Abhängigkeit von der Strecke, die das Egofahrzeug 100 auf seiner berechneten Trajektorie zurücklegen müsste, damit sich seine Front auf gleicher Höhe mit dem Umfeldobjekt 112 befindet. Je näher sich ein Umfeldobjekt 112 an den Rändern des Pass-Schlauchs 500 befindet, desto kleiner ist die Wahrscheinlichkeit p_{2,Pass}.

Die in Abhängigkeit von der Lateralgeschwindigkeit v_{y} des Umfeldobjekts 112 ermittelte Teilwahrscheinlichkeit p_{3,Pass} ist anhand des in Figur 8c dargestellten Diagramms veranschaulicht. Die Teilwahrscheinlichkeit p_{3,Pass} ist maximal, wenn die Lateralgeschwindigkeit v_{y} des betreffenden Umfeldobjekts 112 den Wert 0 aufweist. Für betragsmäßig wachsende Lateralgeschwindigkeiten v_{y} sinkt die Teilwahrscheinlichkeit p_{3,Pass} rasch auf den Wert 0. Hierdurch wird berücksichtigt, dass die Wahrscheinlichkeit dafür, dass das Egofahrzeug 100 das Umfeldobjekt 112 passiert, größer ist, wenn die Lateralgeschwindigkeit v_{y} des Umfeldobjekts 112 geringer ist, so dass nicht davon ausgegangen werden muss, dass das Umfeldobjekt 112 einen Fahrspurwechsel ausführt.

### 4. Cut-in-Hypothese

Die Pass-Hypothese bezieht sich auf Situationen, in denen sich das Egofahrzeug 100 einem Umfeldobjekt 112 nähert, welches sich vor dem Egofahrzeug 100 in einer der Fahrspur 301 des Egofahrzeugs 100 benachbarten Fahrspur 302 befindet, wobei eine hohe Wahrscheinlichkeit dafür besteht, dass das Umfeldobjekt 112 einen Spurwechsel in die Fahrspur 301 des Egofahrzeugs 100 ausführt. Dabei wird davon ausgegangen, dass es aufgrund des Fahrspurwechsels zu einer Kollision mit dem Umfeldobjekt 112 kommen könnte, wenn nicht rechtzeitig ein Brems- oder Ausweichmanöver des Egofahrzeugs 100 ausgeführt wird.

Die Cut-in-Hypothese ist auf Umfeldobjekte 112 anwendbar, die sich innerhalb des Pass-Schlauchs 500 befinden. Für Umfeldobjekte 112, die sich außerhalb des Pass-Schlauchs befinden, wird die Cut-in-Hypothese verworfen. Zudem wird die Cut-in-Hypothese für Umfeldobjekte 112 verworfen, deren Lateralgeschwindigkeit v_{y} betragsmäßig nicht größer als der Schwellenwert V_{y},_{Pass} ist, da bei diesen Umfeldobjekten 112 nicht davon auszugehen ist, dass sie einen Fahrspurwechsel vornehmen.

Für die Umfeldobjekte 112, auf welche die Cut-in-Hypothese gemäß den zuvor beschriebenen Kriterien anwendbar ist, wird die Hypothesenwahrscheinlichkeit aus den Teilwahrscheinlichkeiten p_{i,Cut-in} (i = 1, 2, 3) bestimmt.

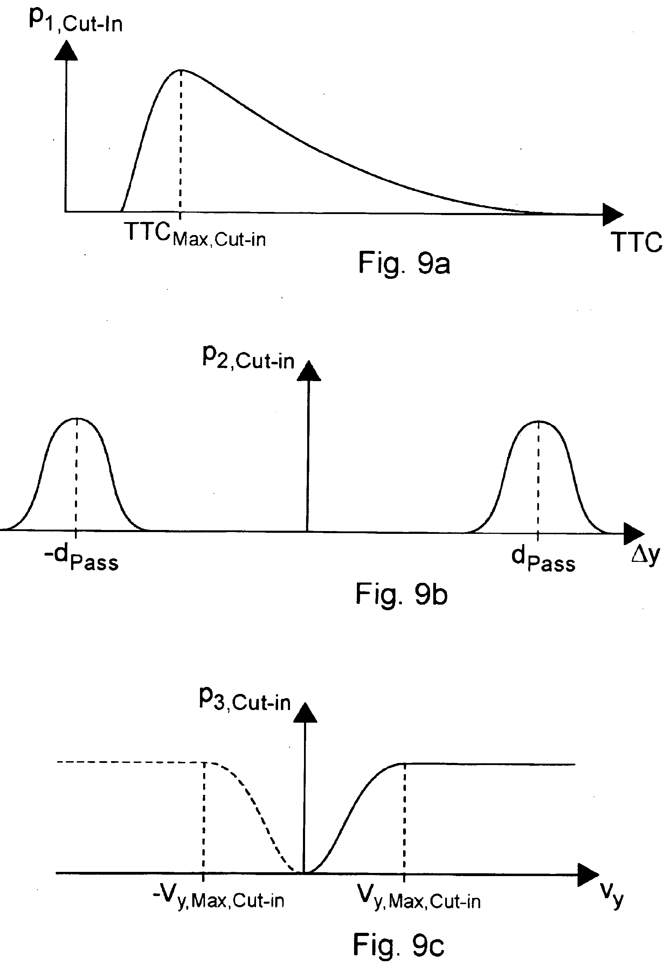

Die in Abhängigkeit von der TTC bestimmte Teilwahrscheinlichkeit p_{1,Cut-in} ist beispielhaft in Figur 9a dargestellt. Sie hat ein Maximum bei dem Wert TTC_{Max,Cut-in}, der größer als der Wert TTC_{Max,Pass} ist, und nimmt mit steigender TTC ab. Die Teilwahrscheinlichkeit p_{1,Cut-in} entspricht dabei im Wesentlichen der zu größeren TTC hin verschobenen Teilwahrscheinlichkeit p_{1,pass}.

In dem in Figur 9b dargestellten Diagramm ist die Teilwahrscheinlichkeit p_{2,Cut-in} veranschaulicht, die in Abhängigkeit von dem Lateralversatz Δy des betreffenden Umfeldobjekts 112 berechnet wird. Sie hat einen ähnlichen Verlauf wie die Wahrscheinlichkeit p_{2,Pass}, und besitzt insbesondere jeweils ein Maximum bei den Werten -d_{Pass} und d_{Pass}. Im Gegensatz zu der Teilwahrscheinlichkeit p_{2,Pass}, fällt die Teilwahrscheinlichkeit p_{2,Cut-in} jedoch rascher ab.

Die in Abhängigkeit von der Lateralgeschwindigkeit v_{y} des betreffenden Umfeldobjekts 112 ermittelte Teilwahrscheinlichkeit p_{3,Cut-in} ist in Figur 9c in einem Diagramm veranschaulicht. Sie ist für Umfeldobjekte 112, die sich links bzw. rechts von der berechneten Trajektorie des Egofahrzeugs 100 befinden, verschieden. Unter der Annahme, dass der Lateralversatz Δy für sich rechts von der Trajektorie des Egofahrzeugs 110 befindliche Umfeldobjekte 112 positiv ist, gilt der rechte, durchgezogen gezeichnete Ast der Teilwahrscheinlichkeit p_{3,Cut-in} für Umfeldobjekte 112, die sich rechts von der Trajektorie des Egofahrzeugs 100 befinden, und der linke, gestrichelt gezeichnete Ast für Umfeldobjekte 112, die sich links von der Trajektorie des Egofahrzeugs 100 befinden. Mit steigendem Betrag der Lateralgeschwindigkeit v_{y} steigt die Teilwahrscheinlichkeit p_{3,Cut-in} auf den Maximalwert an, der bei einer Lateralgeschwindigkeit V_{y,Max,Cut-in} erreicht wird.

### 5. Collision-unavoidable-Hypothese

Die Collision-unavoidable-Hypothese bezieht sich auf Situationen, in denen sich das Egofahrzeug 100 einem Umfeldobjekt 112 nähert, welches sich in derselben Fahrspur 301 vor dem Egofahrzeug 100 befindet, und eine Lateralgeschwindigkeit v_{y} aufweist, die auf einen möglichen Spurwechsel hindeutet. Es wird jedoch von einer kritischen Situation ausgegangen, bei der eine Kollision mit dem Umfeldobjekt 112 nur mit einer geringen Wahrscheinlichkeit durch ein geeignetes Ausweichmanöver und/oder Bremsmanöver des Egofahrzeugs 100 verhindert werden kann.

Die Collision-unavoidable-Hypothese ist auf Umfeldobjekte 112 anwendbar, die sich innerhalb des Run-up-Schlauchs 300 befinden. Umfeldobjekte 112, die sich außerhalb des Run-up-Schlauchs 300 befinden, werden im Hinblick auf die Collision-unavoidable-Hypothese verworfen. Gleichfalls werden Umfeldobjekte 112 verworfen, die keine Lateralgeschwindigkeit v_{y} haben.

Für die Umfeldobjekte 112, auf welche die Collision-unavoidable-Hypothese gemäß den zuvor beschriebenen Kriterien anwendbar ist, wird die Hypothesenwahrscheinlichkeit aus den Teilwahrscheinlichkeiten P_{i,Collision-unavoidable} (i = 1, 2, 3) bestimmt.

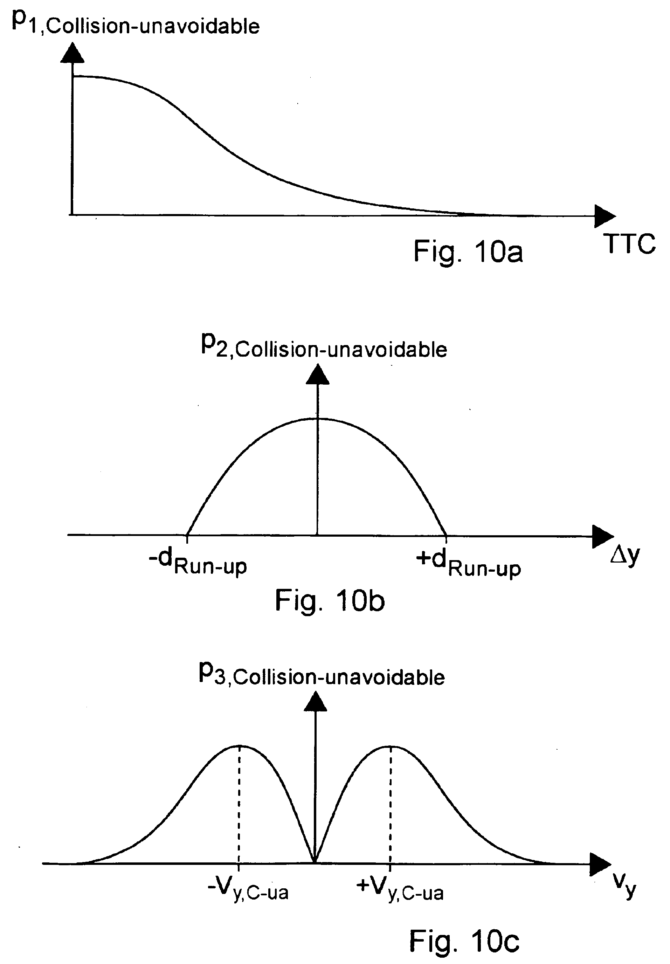

Die in Abhängigkeit von der TTC bestimmte Teilwahrscheinlichkeit P_{1,Collision-unavoidable} ist in Figur 10a veranschaulicht. Sie hat ihr Maximum bei kleinen Werten TTC und nimmt mit steigender TTC ab.

In dem Diagramm in Figur 10b ist die Teilwahrscheinlichkeit p_{2,Collision-unavoidable} veranschaulicht, die in Abhängigkeit von dem Lateralversatz Δy des betreffenden Umfeldobjekts 112 bestimmt wird und der bereits im Zusammenhang mit der Run-up-Hypothese beschriebenen Teilwahrscheinlichkeit p_{2,Run-up} entspricht.

Die Teilwahrscheinlichkeit p_{3,Collision-unavoidable}, die in Abhängigkeit von der Lateralgeschwindigkeit v_{y} eines Umfeldobjekts 112 bestimmt wird, ist in dem Diagramm in Figur 10c veranschaulicht. Entsprechend den zuvor beschriebenen Kriterien für die Anwendbarkeit der Collision-unavoidable-Hypothese nimmt sie bei einer Lateralgeschwindigkeit von v_{y} = 0 den Wert 0 an. Mit steigendem Betrag der Lateralgeschwindigkeit v_{y} vergrößert sich die Teilwahrscheinlichkeit p_{3,Collision-unavoidable} und nimmt ihr Maximum bei dem Wert V_{y,C-ua} an. Vergrößert sich die Lateralgeschwindigkeit v_{y} weiter, nimmt die Teilwahrscheinlichkeit p_{3,Collision-unavoidable} ab. Somit ist die Teilwahrscheinlichkeit p_{3,collision-unavoidable} für Umfeldobjekte 112 mit einer hohen Lateralgeschwindigkeit v_{y} relativ gering. Diese Umfeldobjekte 112 verlassen die Fahrspur 301 des Egofahrzeugs 100 ausreichend schnell, so dass eine Kollision mit einer hohen Wahrscheinlichkeit vermieden wird.

### 6. Collision-Hypothese

Die Collision-Hypothese bezieht sich auf Situationen, in denen sich das Egofahrzeug 100 einem Umfeldobjekt 112 nähert, welches sich in derselben Fahrspur 301 vor dem Egofahrzeug 100 befindet und die Fahrspur 301 nicht verlässt. Dabei wird davon ausgegangen, dass sich eine Kollision zwischen dem Egofahrzeug 100 und dem Umfeldobjekt 112 mit hoher Wahrscheinlichkeit nicht vermeiden lässt.

Ähnlich wie die Collision-unavoidable-Hypothese ist die Collision-Hypothese auf Umfeldobjekte 112 anwendbar, die sich innerhalb des Run-up-Schlauchs 300 befinden. Umfeldobjekte 112, die sich außerhalb des Run-up-Schlauchs 300 befinden, werden im Hinblick auf die Collision- Hypothese verworfen. Gleichfalls werden Umfeldobjekte 112 verworfen, deren Lateralgeschwindigkeit v_{y} betragsmäßig einen vorgegebenen Schwellenwert überschreitet, da bei diesen Objekten davon ausgegangen wird, dass sie die Fahrspur 301 des Egofahrzeugs 100 so schnell verlassen, dass es zu keiner Kollision mit dem Egofahrzeug 100 kommen wird.

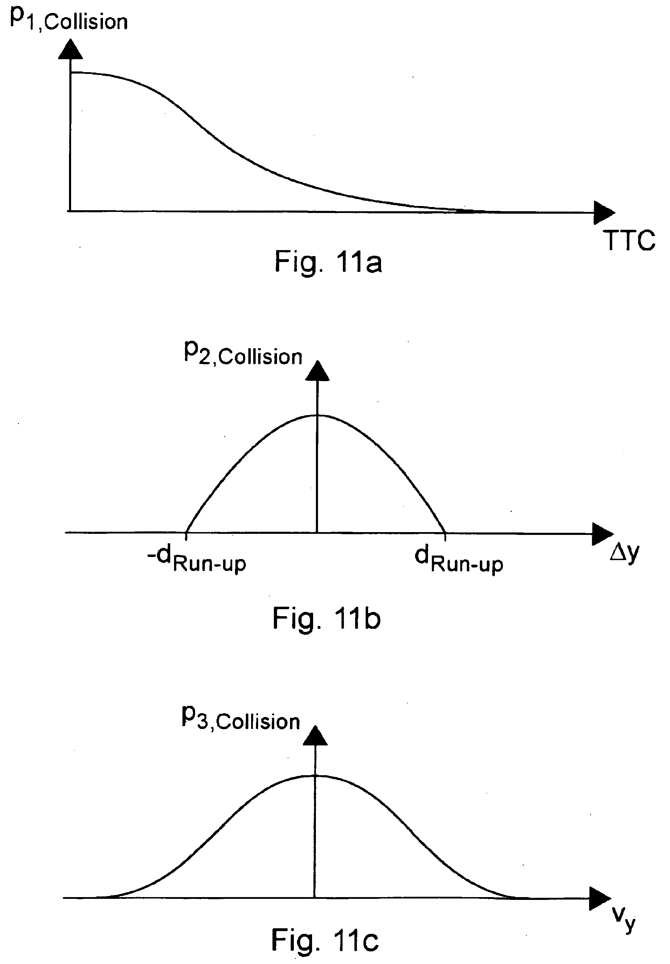

Für die Umfeldobjekte 112, auf welche die Collision-Hypothese gemäß den zuvor beschriebenen Kriterien anwendbar ist, wird die Hypothesenwahrscheinlichkeit aus den Teilwahrscheinlichkeiten p_{i,Collision} (i = 1, 2, 3) bestimmt. Die in Abhängigkeit von der TTC berechnete Teilwahrscheinlichkeit p_{1,Collision}, die in dem in Figur 11a dargestellten Diagramm veranschaulicht ist, entspricht der im Zusammenhang mit der Collision-unavoidable-Hypothese erläuterten Teilwahrscheinlichkeit p₁,_{Collision-unavoidable}. Die in Figur 11 b veranschaulichte Teilwahrscheinlichkeit p_{2,Collision}, die in Abhängigkeit von dem Lateralversatz Δy des Umfeldobjekts 112 ermittelt wird, und die in Figur 11 c veranschaulichte Teilwahrscheinlichkeit p_{3,Collision}, die in Abhängigkeit von der Lateralgeschwindigkeit v_{y} des entsprechenden Umfeldobjekts 112 ermittelt wird, entsprechen den bereits im Zusammenhang mit der Run-up-Hypothese beschriebenen Teilwahrscheinlichkeiten p_{2,Run-up} und p_{3,Run-up}.

Die zuvor dargestellten Hypothesen erlauben, anhand der Art der einem Umfeldobjekt 112 zugeordneten Hypothese, eine Klassifizierung der Kritikalität eines Umfeldobjekts 112, im Hinblick auf die Wahrscheinlichkeit, mit der eine Kollision zwischen Egofahrzeug 100 und dem Umfeldobjekt 112 droht. Für die beschriebenen Rangfolgen besteht dabei im Hinblick auf die Gefährlichkeit des Umfeldobjekts 112 die folgende Rangfolge, bei der die Hypothese in der Reihenfolge sich erhöhender Kollisionswahrscheinlichkeit angegeben sind:
1. Pass-Hypothese
2. ACC-Hypothese
3. Cut-In-Hypothese
4. Run-up-Hypothese
5. Collision-unavoidable-Hypothese
6. Collision-Hypothese

Bei der in dem Gefahrenrechner 202 vorgenommenen Ansteuerung der Sicherheitsmittel 116 des Egofahrzeugs 100 wird daher die Art der auf ein Umfeldobjekt 112 anwendbaren Hypothese bei der Ermittlung der Stufe berücksichtigt, in der die Sicherheitsmittel 116 angesteuert werden sollen. Ferner wird die Hypothesenwahrscheinlichkeit berücksichtigt, die angibt, mit welcher Sicherheit die Hypothese auf ein Umfeldobjekt 112 zutrifft. Bei geringer Hypothesenwahrscheinlichkeit für eine bestimmte Hypothese wird dabei eine geringere Interventionsstufe gewählt, als bei einer großen Hypothesenwahrscheinlichkeit, um unangemessene Sicherheitsmaßnahmen zu vermeiden. Gemäß den zuvor beschriebenen Kriterien für die Anwendbarkeit der vorgegebenen Hypothesen können zudem für ein Umfeldobjekt 112 verschiedene Hypothesen anwendbar sein. Ist dies der Fall, unterscheiden sich jedoch die Hypothesenwahrscheinlichkeiten, die für das betreffende Umfeldobjekt 112 in Bezug auf die verschiedenen Hypothesen bestimmt worden sind. In diesem Fall geben vor allem die Hypothesenwahrscheinlichkeiten den Ausschlag dafür, welche Interventionsstufe von dem Gefahrenrechner 202 gewählt wird.

Bevor die Ansteuersignale zur Ansteuerung 114 in dem Gefahrenrechner 202 bestimmt werden, wird eine weitere Vorfilterung in der Vorfilterungseinrichtung 207 vorgenommen. In einer Ausführungsform wird dabei gegebenenfalls zunächst die Anwendung jeder Hypothese auf eine vorgegeben Anzahl von Umfeldobjekten 112 beschränkt, welche die größten Hypothesenwahrscheinlichkeiten für die entsprechende Hypothese aufweisen. Die übrigen Umfeldobjekte 112 werden für diese Hypothese verworfen. Die vorgegebene Anzahl beträgt dabei beispielsweise sechs.

Aus der Menge der Umfeldobjekte 112 auf die dann noch wenigstens eine Hypothese anwendbar ist, wird dann eine vorgegebene Anzahl von Umfeldobjekten 112 bestimmt, bei denen das Risiko für eine Kollision mit dem Egofahrzeug 100 am größten ist. Die Auswahl dieser Umfeldobjekte 112 erfolgt anhand der Art der den Umfeldobjekten 112 jeweils zugeordneten Hypothese unter Berücksichtigung der Hypothesenwahrscheinlichkeit. Zudem können auch die Werte der TTC, die Kollisionsvermeidungsverzögerung und/oder die Ausweichquerbeschleunigung berücksichtigt werden, die den Umfeldobjekten 112 zugeordnet sind. Die vorgegebene Anzahl beträgt dabei beispielsweise ebenfalls sechs.

Wie auch durch die erste Vorfilterung wird durch diese Begrenzung der innerhalb des Gefahrenrechners 202 zu berücksichtigenden Umfeldobjekte 112 die benötigte Rechenkapazität verringert bzw. die Datenverarbeitungsgeschwindigkeit erhöht.

Innerhalb des Gefahrenrechners 202 werden anhand der Objektdaten der verbleibenden Umfeldobjekte 112 Ansteuersignale zur Ansteuerung der Sicherheitsmittel 116 ermittelt, wobei sich ein Modus zur Ansteuerung der Sicherheitsmittel 116 aus einer Interventionsstufe ergibt, die ebenfalls in dem Gefahrenrechner 202 ermittelt wird. Dabei sind mehrere Interventionsstufen vorgegeben, die sich im Hinblick darauf unterscheiden, ob die Ansteuerung der Sicherheitsmittel 116 von dem Fahrer des Egofahrzeugs 100 wahrgenommen wird, ob ein Eingriff in das Fahrverhalten des Egofahrzeugs 100 vorgenommen wird, und im Hinblick darauf, in welchem Maße gegebenenfalls in das Fahrverhalten des Egofahrzeugs 100 eingegriffen wird. Die Interventionsstufen sind in einer Ausführungsform nummeriert, wobei Interventionsstufen mit höherer Ordnungszahl stärkere Maßnahmen umfassen. Für jede Interventionsstufe sind Modi vorgegeben, in den die Sicherheitsmittel 116 angesteuert werden.

Dabei kann beispielsweise die zur Beeinflussung der Bremsanlage vorgesehene Hydraulikeinheit 105 in folgenden Modi angesteuert werden:
i) Vorbefüllung der Radbremsen 106VL, 106VR, 106HL, 106HR mit Druckmittel, um das Lüftspiel zwischen den Bremskolben und Bremsscheiben zu verringern bzw. zu beseitigen, so dass das Egofahrzeug 100 bei einem nachfolgenden Bremsvorgang rascher verzögert werden kann.
ii) Vorbefüllung der Radbremsen 106VL, 106VR, 106HL, 106HR mit einem höheren Druck, so dass eine geringe Verzögerung des Egofahrzeugs 100 von beispielsweise 0,1 g bewirkt wird, wobei hier und im Folgenden mit g die Erdbeschleunigung bezeichnet ist. Hierdurch kann das Egofahrzeug 100 bei einem nachfolgenden Bremsvorgang ebenfalls rascher verzögert werden.
iii) "Vorbremsen": In diesem Modus werden Radbremsen 106VL, 106VR, 106HL, 106HR mit einem Bremsdruck beaufschlagt, der zu einer stärkeren Verzögerung des Egofahrzeugs 100 von beispielsweise 0,3 g führt
iv) "Zielbremsen": In diesem Modus wird ein selbsttätiger Bremsvorgang mit einer vorgegebenen Verzögerung des Egofahrzeugs 100 ausgeführt. Die Verzögerung kann dabei innerhalb des Gefahrrechners 202 beispielsweise in Abhängigkeit von der Kollisionsvermeidungsverzögerung ermittelt werden, die für ein Umfeldobjekt 112 bestimmt worden ist.
v) "Vollbremsung". In diesem Modus wird ein selbsttätiger Bremsvorgang mit einem maximalen Bremsdruck ausgeführt, bei dem die maximale Bremswirkung der Bremsanlage erzielt wird. Ein Blockieren der Räder 107VL, 107VR, 107HL, 107HR des Egofahrzeugs 100 wird bei der Vollbremsung vorzugsweise durch ein Antiblockiersystem (ABS) des Egofahrzeugs 100 verhindert.

Wie oben bereits beschrieben, kann es darüber hinaus auch vorgesehen sein, die Eintrittsschwelle des hydraulischen Bremsassistenten zu senken. Diese Maßnahme sowie der zuvor unter Ziffer i) aufgeführte Bremseneingriff werden von dem Fahrer bzw. den Insassen des Egofahrzeugs 100 nicht wahrgenommen. Daher können diese Maßnahmen bereits in einer sehr geringen Interventionsstufe vorgesehen sein. In den unter den Ziffern ii) bis v) aufgeführten Ansteuerungsmodi wird in zunehmendem Maß in das Fahrverhalten des Egofahrzeugs 100 eingegriffen. Diese Ansteuerungsmodi sind daher in höheren Interventionsstufen vorgesehen. Insbesondere eine Vollbremsung wird dabei vorzugsweise nur in der höchsten Interventionsstufe ausgeführt.

Als Sicherheitsmittel 116 in dem Egofahrzeug 100 eingesetzte reversible Gurtstraffer können beispielsweise in den folgenden Modi angesteuert werden:
i) Leichtes Anziehen der Sicherheitsgurte mit einer Kraft von beispielsweise etwa 50 Nm, so dass Gurtlose entfernt werden.
ii) Stärkeres Anziehen der Sicherheitsgurte mit einer Kraft von beispielsweise etwa 75 Nm, um die Gurte sicher anzulegen.
iii) Starkes Anziehen der Sicherheitsgurte, um die Fahrzeuginsassen korrekt in ihren Sitzen zu positionieren.

Reversible Gurtstraffer sind dabei vorzugsweise an jedem Sitz des Egofahrzeugs 100 vorhanden und werden für die von den Fahrzeuginsassen belegten Sitze synchron angesteuert. Ein leichtes Anziehen der Sicherheitsgurte, zum Entfernen der Gurtlose ist dabei bereits in niedrigeren Interventionsstufen möglich, da diese zwar von den Fahrzeuginsassen bemerkt, jedoch in der Regel nicht als Komforteinbuße wahrgenommen wird. Die unter den Ziffern ii) und iii) aufgeführten Ansteuerungsmodi werden vorzugsweise erst in höheren Interventionsstufen eingesetzt, um die Fahrzeuginsassen im Falle eines hohen bzw. sehr hohen Kollisionsrisikos geeignet zu sichern.

Darüber hinaus können in einer gefährlichen oder potenziell gefährlichen Fahrsituation verschiedenartige Fahrerwarnungen in dem Egofahrzeug 100 ausgegeben werden. Insbesondere können dabei folgende Warnstufen vorgesehen werden:
i) Eine optische Warnung des Fahrers anhand eines Warnhinweises, der in einem von dem Fahrer des Egofahrzeugs 100 einsehbaren Display dargestellt wird oder mittels einer zusätzlichen Lampe ausgegeben wird, die in der Armaturentafel des Egofahrzeugs 100 angeordnet ist.
ii)- Eine akustische Vorwarnung des Fahrers. Diese kann beispielsweise der an sich bekannten Warnung eines ACC-Systems entsprechen, mit dem dieses den Fahrer zum Eingriffen auffordert.
iii) eine akustische Akutwarnung des Fahrers, die eindrücklicher ist, als die akustische Vorwarnung. Insbesondere kann die Akutwarnung lauter sein, als die Vorwarnung des Fahrers und/oder höhere Töne enthalten.
iv)- Eine haptische Warnung des Fahrers. Diese kann beispielsweise durch einen kurzzeitigen Bremsimpuls erzeugt werden, der mittels der Hydraulikeinheit 105 in die Bremsanlage eingesteuert wird, oder es wird etwa mittels des Lenkaktors kurzzeitig ein Drehmoment auf das Lenkrad 109 aufgebracht.

Eine optische Warnung des Fahrers kann dabei bereits in geringeren Interventionsstufen vorgesehen werden, da diese von dem Fahrer in der Regel als Hinweis und nicht als Störung empfunden wird. Die unter den Ziffern ii) bis iv) aufgeführten Warnstufen werden in höheren Interventionsstufen eingesetzt.

Darüber hinaus können, wie oben bereits erwähnt, Einrichtungen zur Vorkonditionierung passiver Sicherheitsmittel, wie etwa Airbags, zur Verstellung der Sitzposition der Fahrzeuginsassen oder zum Schließen von Fenstern und/oder eines Schiebedachs des Egofahrzeugs 100 durch den Fahrer angesteuert werden. Eine weitere Maßnahme besteht beispielsweise in der Blockierung des Fahrpedals 102 durch einen von dem Gefahrenrechner 202 angesteuerten Aktor.

Die Interventionsstufen umfassen insbesondere eine Interventionsstufe 0, in der keine Ansteuerung der Sicherheitsmittel 116 erfolgt. Darüber hinaus kann eine beliebige Anzahl weiterer Interventionsstufen vorgesehen werden, die mit sich erhöhender Ordnungszahl heftigere Maßnahmen vorsehen. Bei diesen Maßnahmen kann es sich um einzelne der zuvor genannten Maßnahmen handeln, gleichfalls können jedoch auch Kombinationen mehrerer Maßnahmen in einer Interventionsstufe vorgesehen sein.

In einer Ausführungsform sind beispielsweise neben der Interventionsstufe 0 die neun weiteren Interventionsstufen vorgesehen, die im Folgenden mit ihren Ordnungszahlen angegeben werden:
1. Die Auslöseschwelle des hydraulischen Bremsassistenten wird abgesenkt.
2. Zusätzliche zu den Maßnahmen der Stufe 1 wird eine optische und gegebenenfalls akustische Vorwarnung des Fahrers ausgegeben.
3. Zusätzlich zu den Maßnahmen der Stufe 2 erfolgt eine Vorbefüllung der Radbremsen 106VL, 106VR, 106HL, 106HR.
4. Zusätzlich zu den Maßnahmen der Stufe 3 erfolgt eine akustische Akutwarnung des Fahrers, wobei die Akutwarnung anstelle einer gegebenenfalls in Stufe 3 vorgesehenen akustischen Vorwarnung ausgegeben wird.
5. Zusätzlich zu dem Maßnahmen der Stufe 4 wird das Fahrpedal 102 blockiert.
6. Zusätzlich zu den Maßnahmen der Stufe 5 erfolgt eine Vorbefüllung der Radbremsen 106VL, 106VR, 106HL, 106HR mit einem höheren Bremsdruck, die anstelle der in Stufe 5 vorgesehenen Vorbefüllung durchgeführt wird.
7. Zusätzlich zu den Maßnahmen der Stufe 5 erfolgt ein selbsttätiges Vorbremsen, das anstelle der in Stufe 5 vorgesehenen Vorbefüllung der Radbremsen 106VL, 106VR, 106HL, 106HR durchgeführt wird.
8. Zusätzlich zu den Maßnahmen der Stufe 5 erfolgt eine Zielbremsung, die anstelle der in Stufe 5 vorgesehenen Vorbefüllung der Radbremsen 106VL, 106VR, 106HL, 106HR durchgeführt wird.
9. Zusätzlich zu den Maßnahmen der Stufe 8 werden die Sicherheitsgurte mittels der Gurtstraffer stark angezogen, und es erfolgt eine Vorkonditionierung der Airbags des Egofahrzeugs 100.

Zur Ermittlung bzw. Auswahl der Interventionsstufe, die in Bezug auf die vorliegende Fahrsituation angemessen ist, werden in dem Gefahrenrechner 202 die Objektdaten der Umfeldobjekte 112 herangezogen, die nicht in der Vorfilterungseinrichtung 207 verworfen worden sind. Die Objektdaten, die für die Auswertung in dem Gefahrenrechner 202 relevant sind, umfassen insbesondere die TTC, die Kollisionsvermeidungsverzögerung und die Ausweichquerbeschleunigung, die einem Umfeldobjekt 112 zugeordnet sind, die Art der auf das Umfeldobjekt 112 anwendbaren Hypothesen sowie die entsprechenden Hypothesenwahrscheinlichkeiten und die Objektwahrscheinlichkeit.

Darüber hinaus werden zur Bestimmung der Interventionsstufe vorzugsweise verschiedene Größen herangezogen, die das Verhalten des Fahrers des Egofahrzeugs 100 charakterisieren, wie insbesondere die Fahrpedalstellung und die Bremspedalstellung bzw. der von dem Fahrer im Hauptzylinder 105 der Bremsanlage eingestellte Bremsdruck. Vorzugsweise wird zudem der Fahrzeugzustand berücksichtigt, insbesondere der Betriebszustand des Antriebsmotors 101 des Egofahrzeugs 100 und eine abgesicherte Information darüber, ob sich das Egofahrzeug 100 in Vorwärtsrichtung bewegt.

Zur Bestimmung der angemessenen Interventionsstufe ermittelt der Gefahrenrechner 202 zunächst für jedes relevante Umfeldobjekt 112 eine Interventionsstufe pro auf das Umfeldobjekt 112 anwendbarer Hypothese. Das heißt, für ein Umfeldobjekt 112, dem mehrere Situationshypothesen zugeordnet sind, wird jeweils eine Interventionsstufe in Bezug auf jede auf das Umfeldobjekt 112 anwendbare Hypothese ermittelt. Aus den in dieser Weise ermittelten einzelnen Interventionsstufen ermittelt der Gefahrenrechner 202 dann das Maximum, um die Interventionsstufe zu ermitteln, auf deren Grundlage die Ansteuerung der Sicherheitsmittel 116 vorgenommen wird.

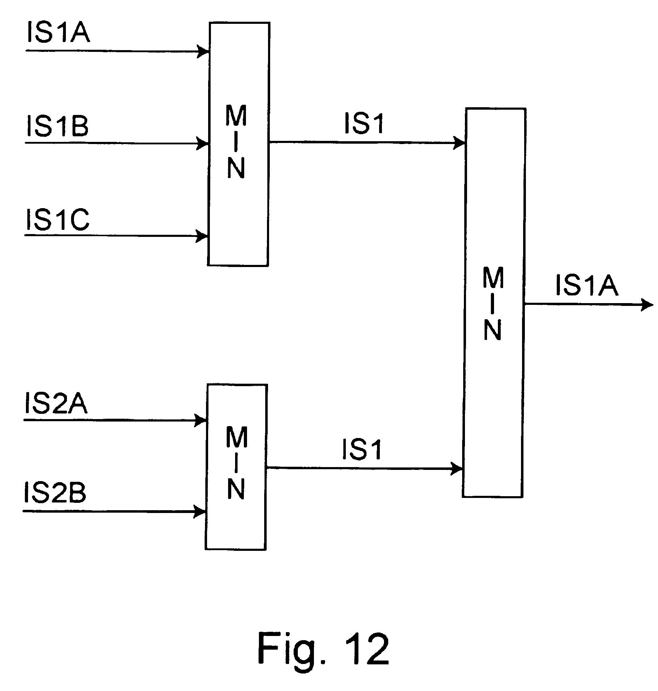

Die von dem Gefahrenrechner 202 durchgeführte Berechnung der Interventionsstufe bezüglich eines Umfeldobjekts 112 und einer auf dieses anwendbaren Hypothese ist schematisch in Figur 12 veranschaulicht.

Dabei wird anhand der Objektdaten eine "gewünschte Interventionsstufe" IS1 bestimmt, welche insbesondere die in der Auswerteeinrichtung 203 vorgenommene Auswertung der Fahrsituation in Bezug auf das Umfeldobjekt 112 berücksichtigt. Wie aus Figur 12 ersichtlich, ist die Interventionsstufe IS1 das Minimum der Interventionsstufen IS1A, IS1B und IS1C.

Die Interventionsstufe IS1A wird in Abhängigkeit von der Art der dem Umfeldobjekt 112 zugeordneten Hypothese ermittelt. Ferner werden bei der Bestimmung der Interventionsstufe IS1A die TTC, die Kollisionsvermeidungsverzögerung und/oder die Ausweichquerbeschleunigung herangezogen, die dem Umfeldobjekt 112 zugeordnet sind. Vorzugsweise berechnet der Gefahrenrechner 202 aus diesen Größen und der Information über die Art der auf das Umfeldobjekt 112 anwendbaren Hypothese ein Gefahrenpotenzial, das ein Maß für das Risiko einer Kollision zwischen dem Egofahrzeug 100 und dem Umfeldobjekt 112 ist. Anhand dieses Gefahrenpotenzials kann dann die Interventionsstufe ISA1 ermittelt werden. In einer Ausführungsform sind dabei anhand von Schwellenwerten Intervalle des Gefahrenpotenzials vorgegeben, denen jeweils eine Interventionsstufe zugeordnet ist.

Die Interventionsstufe IS1B wird aus der dem Umfeldobjekt 112 in Bezug auf die anwendbare Situationshypothese zugeordnete Hypothesenwahrscheinlichkeit bestimmt. Hierzu wird der zwischen 0 und 1 liegende Wertebereich der Hypothesenwahrscheinlichkeit in Intervalle eingeteilt, denen jeweils eine der vorgegebenen Interventionsstufen zugeordnet sind. Aufgrund der nachfolgenden Minimalwertbildung zur Bestimmung der Interventionsstufe IS1 wird die Interventionsstufe IS1 somit auf eine in Abhängigkeit von der Hypothesenwahrscheinlichkeit ermittelte Interventionsstufe begrenzt. Somit ergibt sich bei einer geringen Hypothesenwahrscheinlichkeit auch dann keine hohe Interventionsstufe IS1, wenn die auf das Umfeldobjekt 112 anwendbare Hypothese eine hohe Rangstufe hat. Hierdurch wird die Gefahr von unverhältnismäßigen Sicherheitsmaßnahmen reduziert.

In ähnlicher Weise wird die Interventionsstufe IS1C in Abhängigkeit von der Objektwahrscheinlichkeit ermittelt. Dabei kann es gleichfalls vorgesehen sein, dass der Wertebereich der Objektwahrscheinlichkeit in Intervalle eingeteilt wird, denen jeweils eine Interventionsstufe zugeordnet ist. Aufgrund der nachfolgenden Minimalwertbildung begrenzt dabei die Interventionsstufe IS1C die Interventionsstufe IS1, wodurch die Durchführung unverhältnismäßiger Sicherheitsmaßnahmen im Falle einer ungenauen bzw. unzuverlässigen Detektion des Umfeldobjekts 112 verhindert wird.

Die Interventionsstufe IS2 wird anhand der zuvor genannten Informationen über das Verhalten des Fahrers des Egofahrzeugs 100 und über den Fahrzeugzustand ermittelt. Nachfolgend ergibt sich die insgesamt im Hinblick auf das Umfeldobjekt 112 ermittelte Interventionsstufe IS als Minimum der Interventionsstufen IS1 und IS2. Aufgrund der Minimalwertbildung erfolgt auch anhand der Interventionsstufe IS2 eine Begrenzung der Interventionsstufe IS auf eine Stufe, die insbesondere nicht im Widerspruch zu dem Verhalten des Fahrers steht. Hierdurch wird gleichfalls die Ausführung von unverhältnismäßigen oder von dem Fahrer nicht gewünschten bzw. erwarteten Sicherheitsmaßnahmen vermieden.

In Abhängigkeit von dem Verhalten des Fahrers des Egofahrzeugs 100 wird dabei die Interventionsstufe IS2A ermittelt. Zur Bestimmung der Interventionsstufe IS2A werden in einer Ausführungsform folgende Verhaltensweisen des Fahrers des Egofahrzeugs 100 unterschieden, die einen Anhaltspunkt dafür geben, ob der Fahrer die Situation als unbedenklich, unsicher oder eher gefährlich einschätzt:
i) Der Fahrer beschleunigt das Egofahrzeug 100 durch eine entsprechende Betätigung des Fahrpedals 102. Dies entspricht einer negativen Rückmeldung des Fahrers.
ii) Der Fahrer hat das Fahrpedal 102 innerhalb einer vorgegebenen Zeitspanne nicht mehr betätigt oder die Pedalstellung des Fahrpedals 102 ist innerhalb einer vorgegebenen Zeitspanne unverändert geblieben. In diesem Fall zeigt der Fahrer keine Reaktion auf die aktuelle Fahrsituation.
iii) Der Fahrer löst das Fahrpedal 102. Dies entspricht einer leicht positiven Rückmeldung des Fahrers.
iv) Der Fahrer betätigt das Bremspedal 103 bzw. erhöht den Bremsdruck im Hauptzylinder 104 der Bremsanlage. Dies entspricht einer stark positiven Rückmeldung des Fahrers.

Jeder dieser Verhaltensweisen ist einer Interventionsstufe zugeordnet, die aufgrund er vorgesehenen Minimalwertbildung zur Bestimmung der Interventionsstufe IS der höchsten Interventionsstufe entspricht, die bei dem entsprechenden Verhalten des Fahrers anwendbar ist. Bei einer negativen Rückmeldung des Fahrers ist eine niedrige Interventionsstufe vorgegeben, beispielsweise eine Interventionsstufe, die auf eine Fahrerwarnung beschränkt ist. Ein Eingriff in das Fahrverhalten des Egofahrzeugs 100 erfolgt in diesem Fall nicht, da davon auszugehen ist, dass der Fahrer die Situation nicht als riskant einschätzt. Ist keine Reaktion des Fahrers erkennbar oder liegt eine leicht positive Rückmeldung des Fahrers vor, dann wird vorzugsweise eine mittlere Interventionsstufe vorgegeben. In diesem Fall ist davon auszugehen, dass der Fahrer die Situation zumindest nicht als sicher einschätzt. Bei einer starken positiven Rückmeldung des Fahrers ist davon auszugehen, dass dieser die Fahrsituation zumindest als potenziell gefährlich ansieht und einen Eingriff in das Fahrverhalten für erforderlich hält. Daher ist in diesem Fall vorzugsweise die höchste Interventionsstufe als maximale Interventionsstufe vorgesehen.

Die Interventionsstufe IS2B wird in Abhängigkeit von den Informationen über den Fahrzeugzustand des Egofahrzeugs 100 ermittelt. Dabei wird, wie zuvor bereits erwähnt, geprüft, ob der Antriebsmotor 101 des Egofahrzeugs 100 in Betrieb ist und ob sich das Egofahrzeug 100 in Vorwärtsrichtung bewegt. Ist dies der Fall, dann ist grundsätzlich die Ansteuerung aller vorhandenen Sicherheitsmittel 116 in jedweder Stufe möglich. Daher wird in diesem Fall die höchste Interventionsstufe ausgewählt. Wenn der Antriebsmotor des Egofahrzeugs 100 nicht in Betrieb ist oder sich das Egofahrzeug 100 nicht in Vorwärtsrichtung bewegt, dann werden vorzugsweise keinerlei Sicherheitsmaßnahmen eingeleitet. Daher wählt der Gefahrenrechner 202 in diesem Fall die Interventionsstufe 0 aus.

Die Ansteuerung der Sicherheitsmittel 116 des Egofahrzeugs 100 wird von dem Gefahrenrechner 202 auf der Grundlage der höchsten Interventionsstufe vorgenommen, die für die relevanten Umfeldobjekte 114 in der zuvor beschriebenen Weise ermittelt wird. Die Modi, in denen die Sicherheitsmittel 116 innerhalb der verschiedenen Interventionsstufen betrieben werden, sind innerhalb des Gefahrenrechners 202 bzw. des Sicherheitssystems 114 in einer Tabelle gespeichert. Entsprechend der ermittelten Interventionsstufe werden die vorgesehenen Sicherheitsmittel 116 dann anhand von Steuerbefehlen von dem Gefahrenrechner 202 angesteuert. Falls dabei zur Ansteuerung eines Sicherheitsmittels 116 die Stärke des Eingriffs zu ermitteln ist, wie es beispielsweise im Falle einer Zielbremsung der Fall ist, dann werden die entsprechenden Stellgrößen gleichfalls von dem Gefahrenrechner 202 anhand der Objektdaten des "gefährlichsten Umfeldobjekts" - d.h. des Umfeldobjekts 112, für das die insgesamt maßgebliche Interventionsstufe ermittelt worden ist - berechnet und an das betreffende Sicherheitsmittel 114 übergeben.

## Patentansprüche

1. Verfahren zum Ansteuern von Sicherheitsmitteln (116) in einem Kraftfahrzeug (100) in einer Fahrsituation, in der es zu einer Kollision zwischen dem Kraftfahrzeug (100) und einem Umfeldobjekt (112) im Umfeld des Kraftfahrzeugs (100) kommen kann, wobei die Sicherheitsmittel (116) in vorgegebenen Interventionsstufen ansteuerbar sind, bei dem
- in Abhängigkeit von erfassten Bewegungsdaten des Umfeldobjekts (112) ein Risiko für eine Kollision zwischen dem Kraftfahrzeug (100) und dem Umfeldobjekt (112) ermittelt wird, und nach Maßgabe des Kollisionsrisikos eine erste Interventionsstufe bestimmt wird,
- wenigstens eine Größe ermittelt wird, die ein Verhalten eines Fahrers des Kraftfahrzeugs (100) charakterisiert, wobei in Abhängigkeit von der ermittelten Größe eine zweite Interventionsstufe bestimmt wird, und
- die Interventionsstufe, in der die Sicherheitsmittel (116) angesteuert werden, auf die geringere der ersten und der zweiten Interventionsstufe begrenzt wird,
**dadurch gekennzeichnet,**
**dass** eine Objektwahrscheinlichkeit ermittelt wird, die ein Maß für die Sicherheit ist, mit der das Umfeldobjekt (112) detektiert worden ist, wobei in Abhängigkeit von der Objektwahrscheinlichkeit eine dritte Interventionsstufe ermittelt wird und die Interventionsstufe, in der die Sicherheitsmittel (116) angesteuert werden, auf die geringste der ersten, zweiten und dritten Interventionsstufe begrenzt wird..

2. Verfahren nach Anspruch 1,
**dadurch gekennzeichnet,**
**dass** die Sicherheitsmittel (116) in der geringeren der ersten und der zweiten Interventionsstufe angesteuert werden.

3. Verfahren nach Anspruch 1 oder 2,
**dadurch gekennzeichnet,**
**dass** es sich bei der das Verhalten des Fahrers charakterisierenden Größe um eine Stellung eines Fahrpedals (102) handelt, wobei mittels des Fahrpedals (102) ein Betriebszustand eines Antriebsmotors (101) des Kraftfahrzeugs (100) beeinflussbar ist.

4. Verfahren nach einem der vorangegangenen Ansprüche,
**dadurch gekennzeichnet,**
**dass** die das Verhalten des Fahrers charakterisierende Größe einer Bremskraft entspricht, die von dem Fahrer eingestellt worden ist.

5. Verfahren nach Anspruch 4,
**dadurch gekennzeichnet,**
**dass** es sich bei der das Verhalten des Fahrers charakterisierenden Größe um eine Stellung eines von dem Fahrer bedienbaren Bremspedals (103) zur Betätigung einer Bremsanlage des Kraftfahrzeugs (100) und/oder um einen von dem Fahrer innerhalb der Bremsanlage eingestellten Bremsdruck handelt.

6. Verfahren nach einem der vorangegangenen Ansprüche,
**dadurch gekennzeichnet,**
**dass** anhand der das Verhalten des Fahrers charakterisierenden Größe eine Verhaltensweise ausgewählt wird aus einer Menge vorgegebener Verhaltensweisen, denen jeweils eine Interventionsstufe zugeordnet ist, wobei die Interventionsstufe als zweite Interventionsstufe ermittelt wird, die der ausgewählten Verhaltensweise zugeordnet ist.

7. Verfahren nach einem der vorangegangenen Ansprüche,
**dadurch gekennzeichnet,**
**dass** eine oder mehrere der von der Menge vorgegebener Verhaltensweisen umfassten Verhaltensweisen ausgewählt sind aus der Gruppe umfassend
- eine erste Verhaltensweise, welche eine Veränderung der Fahrpedalstellung umfasst, die zu einer Vergrößerung eines von dem Antriebsmotor (101) bereitgestellten Antriebsmoments führt,
- eine zweite Verhaltensweise, welche ein Beibehalten der Fahrpedalstellung innerhalb eines vorgegebenen Zeitraums umfasst,
- eine dritte Verhaltensweise, welche eine Veränderung der Fahrpedalstellung umfasst, die zu einer Verringerung eines von dem Antriebsmotor (101) bereitgestellten Antriebsmoments führt, und
- eine vierte Verhaltensweise, welche eine Betätigung der Bremsanlage des Kraftfahrzeugs (100) umfasst.

8. Verfahren nach einem der vorangegangenen Ansprüche,
**dadurch gekennzeichnet,**
**dass** wenigstens eine Interventionsstufe eine Ausgabe einer Fahrwamung und/oder eine von dem Fahrer im Wesentlichen nicht wahrnehmbare Beeinflussung der Bremsanlage des Kraftfahrzeug (100) vorsieht, wobei diese Interventionsstufe einer Verhaltensweise des Fahrers, welche eine Veränderung der Fahrpedalstellung umfasst, die zu einer Vergrößerung eines von dem Antriebsmotor (101) bereitgestellten Antriebsmoments führt, zugeordnet ist,

9. Verfahren nach einem der vorangegangenen Ansprüche,
**dadurch gekennzeichnet,**
**dass** wenigstens eine Interventionsstufe eine Beeinflussung eines Fahrverhalten des Kraftfahrzeugs (100) vorsieht, wobei diese Interventionsstufe einer Verhaltensweise des Fahrers, welche eine Betätigung der Bremsanlage des Kraftfahrzeugs (100) umfasst, zugeordnet ist.

10. Computerprogrammprodukt, das ein Computerprogramm umfasst, welches Befehle zur Ausführung eines Verfahrens nach einem der vorangegangenen Ansprüche auf einem Computer aufweist.

11. System zum Ansteuern von Sicherheitsmitteln (116) in einem Kraftfahrzeug (100) in einer Fahrsituation, in der es zu einer Kollision zwischen dem Kraftfahrzeug (100) und einem Umfeldobjekt (112) im Umfeld des Kraftfahrzeugs (100) kommen kann, wobei die Sicherheitsmittel (116) in vorgegebenen Interventionsstufen ansteuerbar sind, umfassend
- eine Auswerteeinheit (201, 205₁,...,205ₙ), die dazu ausgebildet ist in Abhängigkeit von erfassten Bewegungsdaten des Umfeldobjekts (112) ein Risiko für eine Kollision zwischen dem Kraftfahrzeug (100) und dem Objekt zu ermitteln,
- wenigstens einen Sensor zum Erfassen einer Größe, die ein Verhalten eines Fahrers des Kraftfahrzeugs (100) charakterisiert, und
- einen Gefahrenrechner (202), der dazu ausgebildet ist, in Abhängigkeit von dem ermittelten Kollisionsrisiko eine Interventionsstufe zu ermitteln, in Abhängigkeit von der das Verhalten des Fahrers charakterisierenden Größe eine zweite Interventionsstufe zu bestimmen und die Interventionsstufe, in der die Sicherheitsmittel (116) ansteuerbar sind, auf die geringere der ersten und der zweiten Interventionsstufe zu begrenzen
**dadurch gekennzeichnet,**
**dass** der Gefahrenrechner (202) ferner dazu ausgebildet ist, eine Objektwahrscheinlichkeit zu ermitteln, die ein Maß für die Sicherheit ist, mit der das Umfeldobjekt (112) detektiert worden ist, und in Abhängigkeit von der Objektwahrscheinlichkeit eine dritte Interventionsstufe zu ermitteln und die Interventionsstufe, in der die Sicherheitsmittel (116) angesteuert werden, auf die geringste der ersten, zweiten und dritten Interventionsstufe zu begrenzen.

12. Kraftfahrzeug, umfassend Sicherheitsmittel (116) zur Erhöhung der Fahrsicherheit bei einer möglichen Kollision zwischen dem Kraftfahrzeug (100) und einem Umfeldobjekt (112) und ein System nach Anspruch 11 zum Ansteuern der Sicherheitsmittel (116).

## Claims

1. A method for activating safety means (116) in a motor vehicle (100) in a driving situation where a collision may occur between the motor vehicle (100) and an object (112) in the surroundings of the motor vehicle (100), wherein the safety means (116) can be activated at predefined intervention levels, in which
- a risk of a collision between the motor vehicle (100) and the object (112) in the surroundings is determined in accordance with movement data recorded for the object (112) in the surroundings, and a first intervention level is determined in accordance with the collision risk,
- at least one parameter characterizing a behaviour of a driver of the motor vehicle (100) is determined, wherein a second intervention level is determined in accordance with the determined parameter, and
- the intervention level at which the safety means (116) are activated is limited to the lower of said first and second intervention levels,
**characterized in that**
an object probability is determined, which is an indicator of the certainty with which the object (112) in the surroundings has been detected, wherein a third intervention level is determined in accordance with said object probability and the intervention level at which the safety means (116) are activated is limited to the lowest of said first, second and third intervention levels.

2. A method according to claim 1,
**characterized in that**
the safety means (116) are activated at the lower of the first and second intervention levels.

3. A method according to claim 1 or 2,
**characterized in that**
the parameter characterizing the behaviour of the driver is a position of a driving pedal (102), wherein said driving pedal (102) serves to influence an operating state of a drive motor (101) of the motor vehicle (100).

4. A method according to any one of the preceding claims,
**characterized in that**
the parameter characterizing the behaviour of the driver is a brake force set by the driver.

5. A method according to claim 4,
**characterized in that**
the parameter characterizing the behaviour of the driver is a position of a brake pedal (103) that can be operated by the driver to actuate a brake system of the motor vehicle (100), and/or a brake pressure set by the driver within said brake system.

6. A method according to any one of the preceding claims,
**characterized in that**
the parameter characterizing the behaviour of the driver is used to select a behaviour from a plurality of predefined behaviours each of which is associated with an intervention level, wherein the intervention level associated with the selected behaviour is determined as the second intervention level.

7. A method according to any one of the preceding claims,
**characterized in that**
one or more of the behaviours comprised by the plurality of predefined behaviours is/are selected from the group comprising
- a first behaviour comprising a change in position of the driving pedal which results in an increase in the driving torque provided by the drive motor (101),
- a second behaviour comprising maintenance of the position of the driving pedal within a predefined period of time,
- a third behaviour comprising a change in position of the driving pedal which results in a decrease in a driving torque provided by the drive motor (101), and
- a fourth behaviour comprising an actuation of the brake system of the motor vehicle (100).

8. A method according to any one of the preceding claims,
**characterized in that**
according to at least one intervention level, a warning is provided to the driver and/or the brake system of the motor vehicle (100) is influenced in a manner that is essentially unnoticeable by the driver, wherein this intervention level is associated with a behaviour of the driver comprising a change in position of the driving pedal which results in an increase in the driving torque provided by the drive motor (101).

9. A method according to any one of the preceding claims,
**characterized in that**
according to at least one intervention level, a driving behaviour of the motor vehicle (100) is influenced, wherein this intervention level is associated with a behaviour of the driver comprising an actuation of the brake system of the motor vehicle (100).

10. A computer program product comprising a computer program that includes commands for carrying out a method according to any one of the preceding claims on a computer.

11. A system for activating safety means (116) in a motor vehicle (100) in a driving situation where a collision may occur between the motor vehicle (100) and an object (112) in the surroundings of the motor vehicle (100), wherein the safety means (116) can be activated at predefined intervention levels, comprising
- an evaluation unit (201, 205₁, ..., 205ₙ) designed to determine a risk of a collision between the motor vehicle (100) and the object in accordance with movement data recorded for the object (112) in the surroundings,
- at least one sensor for determining a parameter characterizing a behaviour of a driver of the motor vehicle (100), and
- a risk calculator (202) designed to determine an intervention level in accordance with the determined collision risk, to determine a second intervention level in accordance with the parameter characterizing the behaviour of the driver, and to limit the intervention level at which the safety means (116) can be activated to the lower of said first and second intervention levels,
**characterized in that**
the risk calculator (202) is further designed to determine an object probability, which is an indicator of the certainty with which the object (112) in the surroundings has been detected, and to determine a third intervention level in accordance with said object probability, and to limit the intervention level at which the safety means (116) are activated to the lowest of said first, second and third intervention levels.

12. A motor vehicle comprising safety means (116) for an increase in driving safety in case of a potential collision between the motor vehicle (100) and an object (112) in the surroundings, and a system according to claim 11 for activating said safety means (116).

## Revendications

1. Procédé de pilotage de moyens de sécurité (116) dans un véhicule automobile (100) dans une situation de conduite dans laquelle il peut survenir une collision entre le véhicule automobile (100) et un objet environnant (112) dans l'environnement du véhicule automobile (100), les moyens de sécurité (116) pouvant être pilotés dans des étapes d'intervention prédéfinies, dans lequel
- en fonction de données de mouvement détectées de l'objet environnant (112), il est déterminé un risque de collision entre le véhicule automobile (100) et l'objet environnant (112), et une première étape d'intervention étant définie conformément au risque de collision,
- il est déterminé au moins une grandeur qui caractérise un comportement d'un conducteur du véhicule automobile (100), une deuxième étape d'intervention étant définie en fonction de la grandeur déterminée, et
- l'étape d'intervention dans laquelle les moyens de sécurité (116) sont pilotés est limitée à la plus petite parmi la première étape d'intervention et la deuxième étape d'intervention,
**caractérisé en ce**
**qu'**il est déterminé une probabilité d'objet qui est une mesure de la sécurité avec laquelle l'objet environnant (112) a été détecté, une troisième étape d'intervention étant déterminée en fonction de la probabilité d'objet, et l'étape d'intervention dans laquelle les moyens de sécurité (116) sont pilotés étant limitée à la plus petite parmi la première, deuxième et troisième étape d'intervention.

2. Procédé selon la revendication 1,
**caractérisé en ce que**
les moyens de sécurité (116) sont pilotés dans la plus petite parmi la première et la deuxième étape d'intervention.

3. Procédé selon la revendication 1 ou 2,
**caractérisé en ce que,**
concernant la grandeur caractérisant le comportement du conducteur, il s'agit d'une position d'une pédale d'accélération (102), un état de fonctionnement d'un moteur d'entraînement (101) du véhicule automobile (100) pouvant être influencé au moyen de la pédale d'accélération (102).

4. Procédé selon une des revendications précédentes,
**caractérisé en ce que**
la grandeur caractérisant le comportement du conducteur correspond à une force de freinage qui a été réglée par le conducteur.

5. Procédé selon la revendication 4,
**caractérisé en ce que,**
concernant la grandeur caractérisant le comportement du conducteur, il s'agit d'une position d'une pédale de frein (103) utilisable par le conducteur pour l'actionnement d'un circuit de freinage du véhicule automobile (100) et/ou d'une pression de freinage réglée par le conducteur à l'intérieur du circuit de freinage.

6. Procédé selon une des revendications précédentes,
**caractérisé en ce que,**
à l'aide de la grandeur caractérisant le comportement du conducteur, un mode de comportement est sélectionné parmi une quantité de modes de comportement prédéfinis auxquels est affectée respectivement une étape d'intervention, l'étape d'intervention étant déterminée en tant que deuxième étape d'intervention qui est affectée au mode de comportement sélectionné.

7. Procédé selon une des revendications précédentes,
**caractérisé en ce que**
un ou plusieurs des modes de comportement compris dans la quantité de modes de comportement prédéfinis sont sélectionnés parmi le groupe comprenant
- un premier mode de comportement qui comprend une modification de la position de la pédale d'accélération qui conduit à une augmentation d'un moment d'entraînement fourni par le moteur d'entraînement (101),
- un deuxième mode de comportement qui comprend un maintien de la position de la pédale d'accélération à l'intérieur d'une période de temps prédéfinie,
- un troisième mode de comportement qui comprend une modification de la position de la pédale d'accélération qui conduit à une diminution d'un moment d'entraînement fourni par le moteur d'entraînement (101), et
- un quatrième mode de comportement qui comprend un actionnement du circuit de freinage du véhicule automobile (100).

8. Procédé selon une des revendications précédentes,
**caractérisé en ce**
**qu'**au moins une étape d'intervention prévoit une délivrance d'une alarme de conduite et/ou une influence qui est exercée sur le circuit de freinage du véhicule automobile (100) et qui pour l'essentiel n'est pas perceptible par le conducteur, cette étape d'intervention étant affectée à un mode de comportement du conducteur qui comprend une modification de la position de la pédale d'accélération (102) qui conduit à une augmentation d'un moment d'entraînement fourni par le moteur d'entraînement (101).

9. Procédé selon une des revendications précédentes,
**caractérisé en ce**
**qu'**au moins une étape d'intervention prévoit une influence exercée sur un comportement du conduite du véhicule automobile (100), cette étape d'intervention étant affectée à un mode de comportement du conducteur qui comprend un actionnement du circuit de freinage du véhicule automobile (100).

10. Produit de programme d'ordinateur qui comprend un programme d'ordinateur qui présente sur un ordinateur des instructions de réalisation d'un procédé selon une des revendications précédentes.

11. Système de pilotage de moyens de sécurité (116) dans un véhicule automobile (100) dans une situation de conduite dans laquelle il peut survenir une collision entre le véhicule automobile (100) et un objet environnant (112) dans l'environnement du véhicule automobile (100), les moyens de sécurité (116) pouvant être pilotés dans des étapes d'intervention prédéfinies, comprenant
- une unité d'analyse (201, 205₁, ..., 205ₙ) qui est constituée pour, en fonction de données de mouvement détectées de l'objet environnant (112), déterminer un risque de collision entre le véhicule automobile (100) et l'objet,
- au moins un capteur pour détecter une grandeur qui caractérise un comportement d'un conducteur du véhicule automobile (100), et
- un calculateur de risques (202) qui est constitué pour, en fonction du risque de collision déterminé, déterminer une étape d'intervention et pour, en fonction de la grandeur caractérisant le comportement du conducteur, définir une deuxième étape d'intervention, et pour limiter à la plus petite parmi la première et la deuxième étape d'intervention l'étape d'intervention dans laquelle les moyens de sécurité (116) peuvent être pilotés,
**caractérisé en ce que**
le calculateur de risques (202) est en outre constitué pour déterminer une probabilité d'objet qui est une mesure de la sécurité avec laquelle l'objet environnant (112) a été détecté et pour, en fonction de la probabilité d'objet, déterminer une troisième étape d'intervention, et pour limiter à la plus petite parmi la première, deuxième et troisième étape d'intervention l'étape d'intervention dans laquelle les moyens de sécurité (116) sont pilotés.

12. Véhicule automobile, comprenant des moyens de sécurité (116) destinés à augmenter la sécurité de conduite en cas de collision possible entre le véhicule automobile (100) et un objet environnant (112), et un système selon la revendication 11 pour le pilotage des moyens de sécurité (116).
